# EUROPÄISCHE PATENTSCHRIFT

(11) **EP 1 083 066 B1**
(45) Veröffentlichungstag und Bekanntmachung des Hinweises auf die Patenterteilung: **08.03.2006**
(21) Anmeldenummer: 00119215.2
(22) Anmeldetag: 06.09.2000
(51) Int. Cl.: B60C 17/04, B60C 17/06

(54) **Ringförmiger Notlaufstützkörper für Fahrzeugreifen, und Rad mit demselben**
Annular safety support for vehicle tyre, and wheel containing the same
Appui annulaire de sécurité pour pneu de véhicule, et roue pourvue d'un tel appui

(30) Priorität: 10.09.1999 DE 19943482
(43) Veröffentlichungstag der Anmeldung: 14.03.2001
(73) Patentinhaber: Continental Aktiengesellschaft, 30165 Hannover (DE)
(72) Erfinder: Strzelczyk, Matthias, Dr., 31515 Wunstorf (DE)

(56) Entgegenhaltungen:
- EP-A- 0 158 039
- WO-A-00/24598
- DE-A- 3 605 803
- US-A- 1 932 191
- US-A- 5 450 887

## Beschreibung

Die Erfindung betrifft ein Fahrzeugrad mit Felge und schlauchlosem Fahrzeugluftreifen, bei dem auf der radial äußeren Mantelfläche der Felge ein ringförmiger Stützkörper zum Stützen der Lauffläche des Fahrzeugluftreifens in einem Fahrzeugrad im Notlauf bzw im Pannenlauf des Fahrzeugrades durch Abstützen der Innenfläche des Laufstreifens auf der radialen Außenfläche des ringförmigen Stützkörpers angeordnet ist.

Ein derartiges Fahrzeugrad mit ringförmigem Stützkörper, der zumindest in seinem radial äußeren Bereich mit elastomerem Material und mit einer Profilierung ausgebildet ist, die parallele Profilrillen umfaßt, wobei zwischen jeweils zwei benachbarten Profilrillen eine Profilrippe eingeschlossen ist, die in ihrer Querschnittskontur in einer Schnittfläche senkrecht zum Rippenverlauf seitlich zu den sie einschließenden Profilrillen jeweils durch eine Seitenfläche und durch eine die beiden Seitenflächen in deren radialen Endbereich verbindende radiale Außenseite begrenzt wird, ist beispielsweise aus der EP 0 796 747 A1 bekannt.

Für gute Stützwirkung mit hoher Haltbarkeit im Notlauf bzw Pannenlauf ist eine möglichst große stützende Kontaktfläche wünschenswert. Um guten Komfort und gutes Notlauf- bzw Pannenlaufhandling im Notlauf bzw Pannenlauf zu gewährleisten, werden die Stützelemente mit Profilrippen und Profilrillen wie beispielsweise in der EP 0 796 747 A1 dargestellt ausgebildet.

Die Querschnittskontur in einer Schnittfläche senkrecht zum Rippenverlauf dieser Profilrippen ist im wesentlichen rechteckig. Die Seitenflächen erstrecken sich geradlinig in radialer Richtung nach außen. Die radiale Außenseite dieser jeweils zwischen zwei Profilrillen angeordneten Profilrippen bilden jeweils zylindrische Mantelfächen, so daß im Not- bzw Pannenlauf im Moment des Berührkontakts des Stützkörpers mit der Lauffläche die Lauffläche unmittelbar auf der gesamten Breite der radialen Außenseite der einzelnen Profilrippe aufliegt und gestützt wird. Hierdurch wird - wie für gute Haltbarkeitseignung gewünscht - eine große Stützfläche im Notlauf bzw Pannenlauf erzielt. Die Kontur der Profilrippe entspricht bei den bekannten Stützkörpern im wesentlichen der Kontur von Profilrippen im Laufstreifen eines Fahrzeugluftreifens, bei der die Profilrippen zur Erzielung guter Bodenhaftung eine im wesentlichen zylindrische radiale Außenfläche aufweisen.

Erfordernisse - wie beispielsweise Traktion, Nassgriff u.a. - wie sie von Mischungen.für den Laufstreifen gefordert werden, werden für die Notlaufstützfläche nicht gefordert. Bei Notlaufstützkörpern werden aufgrund der abweichenden Anforderungen an die Notlaufstützfläche gegenüber der Lauffläche des Fahrzeugluftreifens in der Regel weichere Gummimischungen bevorzugt, die besonderen Komfort im Notlauf ermöglichen sollen, abriebfest sind und nur geringen Wärmeaufbau ermöglichen sollen.

Im Not- bzw Pannenlauf unterliegen die Profilrippen starken Wechselbeanspruchungen, insbesondere Biegebeanspruchungen um ihre Längsachse. Die starken, wechselnden Verbiegungen können dabei bereits nach relativ kurzer Belastungszeit besonders bei weichen Materialien im Profilaufbau zum Ausreißen in den Übergangsbereichen zwischen Seitenwand und radialer Außenseite und im Übergangsbereich der Profilrippen und zwischen Seitenwand und Profilrillengrund führen. Darüberhinaus kann durch die Wechselbiegung in ungewünschtem Maße Wärme im Profil erzeugt. Auch hierdurch kann das Profil frühzeitig zerstört werden. Die Haltbarkeit wird somit trotz großer effektiver Stützfläche reduziert. Die Funktionsfähigkeit eines Fahrzeugrades mit einem derartigen Stützkörper im Notlauf- bzw Pannenlauf kann hierdurch unerwünscht zeitlich stark begrenzt werden.

Aus der EP 0 158 039 A1 ist ein Fahrzeugrad mit Fahrzeugluftreifen und Stützfläche bekannt, bei der sowohl die radiale Innenseite des Laufstreifens als auch die radiale Außenseite der Stützfläche zueinander mit derart korrespondierend profilierten Rillen und Riffelungen ausgeblildet sind, dass sie im Pannenfall einen Formschluss bildende Verzahnung gewährleisten.

Aus der US 5 450 887 ist es bekannt, die Stützfläche eines Stützkörpers im Gesamten an ihrer radialen Außenseite der Aufliegekontur des Fahrzeugluftreifens korrespondierend konvex geformt auszubilden, so dass eine zusätzliche Rillenbildung im Stützkörper in Verbindung mit der gesamt konvexen Formgebung ermöglicht, dass sich im Notfall der Stützkörper entsprechend der Deformationen des Laufstreifens mit verformen kann.

Der Erfindung liegt die Aufgabe zugrunde in einfacher Weise die Notlauf- bzw Pannenlauffähigkeit eines Ringförmigen Stützkörpers zum Stützen der Lauffläche eines Fahrzeugluftreifens in einem Fahrzeugrad im Notlauf bzw im Pannenlauf des Fahrzeugrades durch Abstützen des Laufstreifens auf der radialen Außenfläche des ringförmigen Stützkörpers gemäß den Merkmalen des Oberbegriffs von Anspruch 1 beim Einsatz im Not- bzw Pannenlauf in einem Fahrzeugrad zu verbessern.

Die Aufgabe wird erfindungsgemäß durch die Ausbildung eines Fahrzeugrades gemäß den Merkmalen von Anspruch 1 gelöst.

Die Ausbildung der zwischen den Profilrillen angeordneten Profilrippe mit einer im unbelasteten Zustand im Bereich der radialen Außenseite konvex gekrümmten Querschnittskontur bewirkt, daß im Moment des Berührkontakts mit der Lauffläche des Fahrzeugreifens im Notlauf bzw Pannenlauf zunächst nur im wesentlichen linienförmiger Berührkontakt zwischen Profilrippe und Lauffläche auftritt und danach unter der Belastung die Profilrippe zumindest in ihrem äußeren radialen Bereich radial komprimiert wird, wobei die radiale Außenseite aufgeweitet wird, sodaß im Zustand der eigentlichen Stützwirkung eine entsprechend größere effektive Stützfläche zwischen Profilrippen und Lauffläche erzeugt wird. Das verzögerte Auftreten der effektiven Größe der Stützfläche durch Verformung der im unbelasteten Zustand konvexen Profilrippe erhöht zusätzlich den Komfort des Fahrzeugrades im Notlauf bzw Pannenlauf. Darüberhinaus wird die Profilrippe aufgrund der unterschiedlichen radialen Erstreckungen entland des konvexen Krümmungsverlaufs im belasteten Zustand zusätzlich versteift, sodaß die Wechselbelastungen weniger ausgeprägte Verbiegungen der Profilrippe zur Folge hat. Die Wärmeentstehung kann reduziert werden. Die Zerstörunggefahr durch Ausreißen der Profilrippe kann weitgehend verhindert werden. Die Haltbarkeit des Stützkörpers im Notlauf bzw Pannenlauf wird verbessert.

Durch Ausbildung des Stützkörpers gemäß den Merkmalen von Anspruch 2 wird zusätzlich die Anbindung der Profilrippe an den Rillengrund versteift, sodaß die Gefahr einer Rißbildung im Übergangsbereich zwischen Profilrippe und Profilrillengrund zuverlässig minimiert werden kann.

Durch Ausbildung des Stützkörpers mit geneigten Seitenwänden der Profilrippen gemäß den Merkmalen von Anspruch 3 wird die Biegesteifigkeit der Profilrippen zusätzlich erhöht und die Zerstörungsgefahr kann weiter reduziert werden.

Die Ausbildung gemäß den Merkmalen von Anspruch 4 ermöglicht einen fließenden Übergang der Konturgebung einer Profilrippe, wodurch die Steifigkeit zusätzlich erhöht werden kann.

Bevorzugt, weil besonders steif und rißfest, ist die Ausbildung mit stetigem fließendem Verlauf aus der Profilrille bis zur nächsten Profilrille gemäß den Merkmalen von Anspruch 5. Die Ansprüche 6 und 7 beinhalten bevorzugte Ausführungen dieses Verlaufs.

Bevorzugt ist eine Ausbildung gemäß den merkmalen von Anspruch 8, wobei die Länge der maximalen radialen Erstreckung der Profilrippe im unbelasteten Zustand des Stützelements ausgehend vom Rillengrund der benachbarten Rillen bis zur maxialen radialen Erstreckung der Profilrippe im Bereich zwischen dem halben und dem dritten Teil der radialen Erstreckung des ringförmigen Stützkörpers gemessen von dessen radialer Innenseite im Bereich der Profilrippe und der maximalen radiale Erstreckung der Profilrippe ausgebildet ist.

Besonders vorteilhaft ist die Ausbildung gemäß den Merkmalen von Anspruch 9, da hierdurch die Gefahr gegenseiteiger negativer Beeinflussung der Profilierung vom Laufstreifen und der des Stützelements im Notlauf bzw Pannenlauf auf die jeweilige Funktion zuverlässig minimiert werden kann.

Besonders vorteilhaft ist die Ausbildung gemäß den Merkmalen von Anspruch 10.

Bevorzugt ist die Ausbildung gemäß den Merkmalen von Anspruch 11, wobei die Profilrippen, die jeweils von zwei benachbarten Profilrillen eingeschlossen werden, in Umfangsrichtung des Stützkörpers ausgerichtet sind und sich über den gesamten Umfang des Stützkörpers erstrecken. Die Ansprüche 12 und 13 stellen bevorzugte Ausführungen dar. Die Ausbildung der Profilrippen mit einem in Umfangsrichtung periodisch gekrümmten - insbesondere wellenförmigen - Verlauf ermöglicht eine zusätzliche Versteifung der Profilrippen, die eine besonders gute Einstellung der Handlingeigenschaften des Fahrzeugrades im Notlauf bzw Pannenlauf ermöglichen. Bevorzugt sind die Amplituden und/oder Frequenz der periodischen Krümmung über den Umfang konstant.

Die Ausbildung gemäß den Merkmalen von Anspruch 14 ermöglicht eine zusätzliche Versteifung der Profilrippen durch gegenseitige Anbindung.

Bevorzugt ist die Ausbildung eines Fahrzeugrades gemäß den Merkmalen von Anspruch 16 zur Erzielung besonders guter Notlaufeigenschaften, da im Notlauf hierdurch Kräfte aus dem Laufstreifen in gleicher axialer Position in die Felge eingeleitet werden können wie im Normalbetrieb.

Die Ausbildung des Fahrzeugrads nach Anspruch 16 ermöglicht in einfacher Weise, daß die Felgenmantelfläche vollständig zur Ausgestaltung einer Notlaufstützfläche zur Verfügung steht und der Reifen dennoch zuverlässig und einfach und zwar in der Stirnfläche der Felge befestigt werden kann. Nach Einführen des Wulstes in die Ringkammer wird der Füllring in die Ringkammer eingeschoben und der Wulst hierdurch formschlüssig zur Ringkammer fixiert.

Bevorzugt ist die Ausbildung eines Fahrzeugrads gemäß den Merkmalen von Anspruch 17. Der in seiner Umfangslänge - insbesondere elastisch - veränderbare Wulstkern ermöglicht die Montage des Wulstes durch Bewegung über die radial äußere Mantelfläche der Felge - insbesondere über die Notlaufstützfläche - mit einem größeren Wulstkerndurchmesser als im befestigten Betriebszustand des Wulstes und zur Bewegung über das Felgenhorn mit einem kleineren Wulstkemdurchmesser als im befestigten Betriebszustand, sodaß die Ausbildung der radial äußeren Mantelfläche der Felge - insbesondere der Notlaufstützflächen - nicht mehr in Abhängigkeit vom Durchmesser des Wulstkerns im Betriebszustand und vom inneren Feigenhorndurchmesser, sondern in erster Linie nach sonstigen Kriterien - beispielsweise optimalen Notlaufeigenschaften entsprechend - ausgebildet werden kann. Bevorzugt ist die Ausbildung gemäß den Merkmalen von Anspruch 18. Nach Einführen des Wulstes in die Ringkammer wird der Füllring radial innerhalb des Wulstes axial in die Ringkammer eingeführt, sodaß zwischen radial innerer Ringkammerwand und Füllring, zwischen Füllring und Wulst und zwischen Wulst und radial äußerer Ringkammerwand radialer Formschluß und zumindest zwischen Wulst und dem die axial außeren Ringkmmmerwand bildenden Felgenhorn axialer Formschluß hergestellt wird. Während des Fahrzeugradbetriebes besteht sowohl im Normal- als auch im Notlaufbetrieb nach Druckluftverlust ein zuverlässiger Formschluß zumindest nach axial außen und nach radial außen und nach radial innen zwischen einstückiger Ringkammer der Felge und Wulst. Sowohl die wesentlichen axialen als auch die radial auf den Wulst wirkenden Kräfte werden somit unmittelbar in die im Befestigungsbereich einstückige Felge eingeleitet. In das einzige zusätzliche Element, den Füllring, werden auch im Notlaufbetrieb keine wesentlichen axialen Kräfte eingeleitet. Auf diese Weise kann der Wulst sogar im Notlaufbetrieb sicher und zuverlässig seine Position in der Ringkammer beibehalten. Der in seiner Umfangslänge veränderbare Wulst kann somit in einfacher und funktionssicherer Weise sowohl montiert als auch demontiert werden wobei sowohl die Notlaufstüzflächen für den Notlauf optimiert als auch das Felgenhorn hinsichtlich der axialen Stütze für den Wulst und der Wulstkern in seinem Betriebszustand hinsichtlich seiner Eigenschaften im Betriebszustand optimiert werden können. Besonders sicher ist die Krafteinleitung in die Felge, wenn der Wulst über seine ganze axiale Erstreckung nach radial innen vollständig auf dem Füllring aufliegt. Wenn der Wulst und der Füllring die Ringkammer vollständig ausfüllen, wird ein besonders zuverlässiger Formschluss zwischen Wulst und Felge erzielt. Durch Ausbildung des Fahrzeugluftreifens mit elastisch veränderbarer Umfangslänge des Wulstes ist besonders einfach und sicher eine Umfangslängenveränderung von einer ersten Umfangslänge zu individuell entsprechend den jeweiligen Erfordernissen geänderten weiteren Umfangslängen entgegen der Wirkung rückstellender Kräfte und wieder zurück in die erste Umfangslänge unter Ausnützung der rückstellenden Kräfte erzielbar.

Bevorzugt ist die Ausbildung gemäß den Merkmalen von Anspruch 19 zur Erzielung besonders guter Notlaufeigenschaften, da im Notlauf hierdurch Kräfte aus dem Laufstreifen in gleicher axialer Position in die Felge eingeleitet werden können wie im Normalbetrieb. Darüberhinaus ist der bei beispielsweise Befahren eines Bordsteins wesentlich beanspruchte Laufstreifenrandbereich auch im Notlauf bzw im Pannenlauf durch den Stützkörper gestützt. Die beidseitige Anordnung ermöglicht eine besondere Sicherung beim in beiden Laufstreifenrandbereichen.

Eine alternative vorteilhafte Ausbildung zur Erzielung besonders guter Notlaufeigenschaften ist die Ausbildung gemäß den Merkmalen von Anspruch 20, da im Notlauf hierdurch Kräfte aus dem Laufstreifen in gleicher axialer Position in die Felge eingeleitet werden können wie im Normalbetrieb. Darüberhinaus ist der bei beispielsweise Befahren eines Bordsteins wesentlich beanspruchte Laufstreifenrandbereich auch im Notlauf bzw im Pannenlauf durch den Stützkörper stützbar und der Laufstreifen über einen sehr weiten Bereich gestützt, so daß eine große Stützwirkung auch im Kronenbereich der Lauffläche erzielt werden kann.

Besonders vorteilhaft ist eine Ausbildung des Fahrzeugrades gemäß den Merkmalen von Anspruch 21, bei dem der Wulstkern ein im Wulst integriert ausgebildeter Gummikem ist. Der Gummikern ist einfach herzustellen und kann besonders einfach und zuverlässig im Wulst verankert werden. Der Wulst kann hierdurch in einfacher, zuverlässiger Weise in seiner Umfangslänge elastisch dehnbar ausgebildet werden. Für einen besonders sicheren Sitz ist der Gummikem mit einer Shore -A- Härte aus dem Bereich von 80 bis 100 - bevorzugt aus dem Bereich zwischen 85 bis 90 -ausgebildet.

Besonders vorteilhaft, weil einfach herzustellen, zu montieren und zu demontieren ist die Ausbildung gemäß den Merkmalen von Anspruch 22. Durch die zylindriche Ausbildung der radial äußeren Mantelfläche des Füllrings wird darüberhinaus zusätzlich besonders zuverlässig ein Einleiten axialer Kräfte vom Wulst in den Füllring verhindert, sodaß die Verankerung des Wulstes noch zuverlässiger wird.

Durch die Ausbildung eines Fahrzeugrades gemäß den Merkmalen von Anspruch 23, bei dem der größte Außendurchmesser der Notlaufstützflächen um einen Faktor zwischen 1,05 und 1,3 größer als der Innenringdurchmesser des Wulstkems im montierten Zustand des Fahrzeugrades beträgt, ermöglicht optimale Notlaufeigenschaften durch besonders großen Außendurchmesser der Notlaufstützflächen bei Beibehaltung der zur Erzielung guter Einfederung des Reifens und somit guter Komforteigenschaften optimaler kleiner Innenringdurchmesser des Wulstkems. Die Ausbildung eines Fahrzeugrades, bei dem der größte Außendurchmesser der Notlaufstützflächen um einen Faktor zwischen 1,1 und 1,2 größer als der Innenringdurchmesser des Wulstkerns im montierten Zustand des Fahrzeugrades beträgt, stellt einen opimale Ausbildungsbereich der Standardreifendimensionen zur Lösung der Zielkonflikte zwischen gute Notlaufeigenschften einerseits und Komfort und Gewicht des Fahrzeugrades andererseits dar.

Die Ausbildung eines Fahrzeugrades, bei dem der Wulstkern eine Dehnbarkeit und/oder Stauchbarkeit von 5 bis 30 % aufweist, ermöglicht eine einfache und zuverlässige Montage trotz optimaler Notlaufeigenschaften durch Ausbildung besonders großer Außendurchmesser der Notlaufstützflächen trotz Beibehaltung der Ausbildung der Erzielung guter Einfederung des Reifens und somit guter Komforteigenschaften durch optimal kleine Innenringdurchmesser des Wulstkerns. Durch einfaches - insbesondere elastisches - Dehnen und/oder Stauchen des Wulstes wird der Wulst jeweils auf den zur Montage bzw zur Demontage über die Notlaufstützflächen erforderlichen optimalen Durchmesser, auf den zur Montage bzw zur Demontage über das nach innen gerichtete Felgenhorn erforderlichen optimalen Durchmesser und auf den zum sicheren Sitz in der Ringkammer erforderlichen optimalen Durchmesser eingestellt. Die Ausbildung eines Fahrzeugrades, bei dem der Wulstkern eine Dehnbarkeit und/oder Stauchbarkeit von 10 bis 20 % ermöglicht eine einfache und zuverlässige Montage bei opimalem Ausbildungsbereich der Standardreifendimensionen zur Lösung der Zielkonflikte zwischen guten Notlaufeigenschaften einerseits und Komfort und Gewicht des Fahrzeugrades andererseits.

Bevorzugt ist die Ausbildung gemäß den Merkmalen von Anspruch 25, wonach der Wulstkern eine Dehnbarkeit von 5 bis 30 % und eine Stauchbarkeit von 1 bis 5% aufweist und wonach der Wulstkern insbesondere im montierten Zustand des Fahrzeugrades ungedehnt und ungestaucht ist. Durch einfaches - insbesondere elastisches - Dehnen aus dem ungedehnten und ungestauchten Zustand wird der Wulstkern auf einen zur Montage bzw Demontage über die Notlaufstützfläche optimal großen Durchmesser gebracht. Durch einfaches - insbesondere elastisches - Stauchen aus dem ungedehnten und ungestauchten Zustand wird der Wulstkern auf einen zur Montage bzw Demontage über das nach innen gerichtete Felgenhorn optimal kleinen Durchmesser gebracht. Die Ausbildung eines Fahrzeugrades, bei dem der Wulstkern eine Dehnbarkeit 10 bis 20 % und eine Stauchbarkeit von 2,5 bis 3,5 % aufweist, ermöglicht eine einfache und zuverlässige Montage bei opimalem Ausbildungsbereich der Standardreifendimensionen zur Lösung der Zielkonflikte zwischen guten Notlaufeigenschaften einerseits und Komfort und Gewicht des Fahrzeugrades andererseits.Besonders vorteilhaft ist es, wenn der Wulstkern im montierten Zustand des Fahrzeugrades ungedehnt und ungestaucht ist und somit in Umfangsrichtung weitgehend frei von in Umfangsrichtung wirkenden inneren Kräften ist. Besonders vorteilhaft ist hierbei die elastische dehnbare und elastisch stauchbare Ausbildung. Der Wulstkern wird aus dem ungedehnten und ungestauchten Zustand zur Montage über die Notlaufstützflächen den elastischen Rückstellkräften entgegenwirkend in Umfangsrichtung gedehnt. Nach der Montage über die Notlaufstützflächen wird er duch die Rückstellkräfte wieder in seiner Umfangslänge bis in den ungedehnten und ungestauchten Zustand verkleinert. Zur Montage über das radial nach innen gerichtete Felgenhorn wird der Wulstkern aus dem ungedehnten und ungestauchten Zustand den elastischen Rückstellkräften entgegenwirkend in Umfangsrichtung gestaucht. Nach der Montage über das Felgenhorn wird er in der Ringkammer duch die Rückstellkräfte wieder in seiner Umfangslänge bis in den ungedehnten und ungestauchten Zustand vergrößert. In entsprechenderweise erfolgt die Demontage.

Bevorzugt ist das Fahrzeugrad gemäß den Merkmalen von Anspruch 26 derart ausgebildet, daß die axial äußere Stirnfläche als eine axiale Auflagefläche zur axialen Stütze der unteren Reifenseitenwand ausgebildet ist. Auf diese Weise ist der Reifen bei Kurvenfahrten im unteren Seitenwandbereich zur Erzielung guter Handlingeigenschaften axial gestützt und kann bei besonderen Stoßbelastungen unter Aufhebung der axialen Stützwirkung bis in den unteren Seitenwandbereich zur Erzielung guter Komforteigenschaften einfedern.

Die Erfindung wird im folgenden anhand der in den Figuren 1 bis 13 dargestellten Ausführungsbeispiele näher erläutert, wobei in den Fig. 1 bis 9 zur Vereinfachung der Stützring noch ohne erfindungsgemäße Querschnittskontur der verdickten Außenseite dargestellt ist. Hierin zeigen:
- Fig. 1: eine Querschnittsdarstellung eines Fahrzeugrades mit montiertem Fahrzeugreifen,
- Fig. 2: Querschnittsdarstellungen von Ausführungsformen des Füllrings,
- Fig. 3: Querschnittsdarstellungen von Ausführungsformen des Wulstbereichs,
- Fig. 4: schematische Darstellung zur Erläuterung der Montage und der Demontage,
- Fig. 5: Querschnittsdarstellung des Fahrzeugrades gemäß Fig.1 mit Aufbau des Notlaufstützrings
- Fig. 6: Querschnittsdarstellung eines Fahrzeugrades gemäß Fig.1 in zweiter Ausführungsform
- Fig. 7: Querschnittsdarstellung eines Fahrzeugrades gemäß Fig.1 in dritter Ausführungsform
- Fig. 8: weitere Ausführungsformen einer formschlüssigen Fixierung des Notlaufstützrings
- Fig. 9: Querschnittsdarstellung eines Fahrzeugrades gemäß Fig.1 mit altemativer Anordnung des Stützrings
- Fig.10: erste erfindungsgemäße Ausführungsform der Querschnittskontur der Profilrippen und Profilrillen der radial äußeren Oberfläche des Stützrings
- Fig.11: zweite erfindungsgemäße Ausführungsform der Profilrippen und Profilrillen der radial äußeren Oberfläche des Stützrings
- Fig.12: Darstellungen zur Erläuterung des Umfangsverlaufs der Profilrippen und Profilrillen des Stützrings
- Fig. 13: Darstellungen einer Ausführung von Profilrippen und Profilrillen des Stützrings mit Stegen zur Anbindung benachbarter Profilrippen.

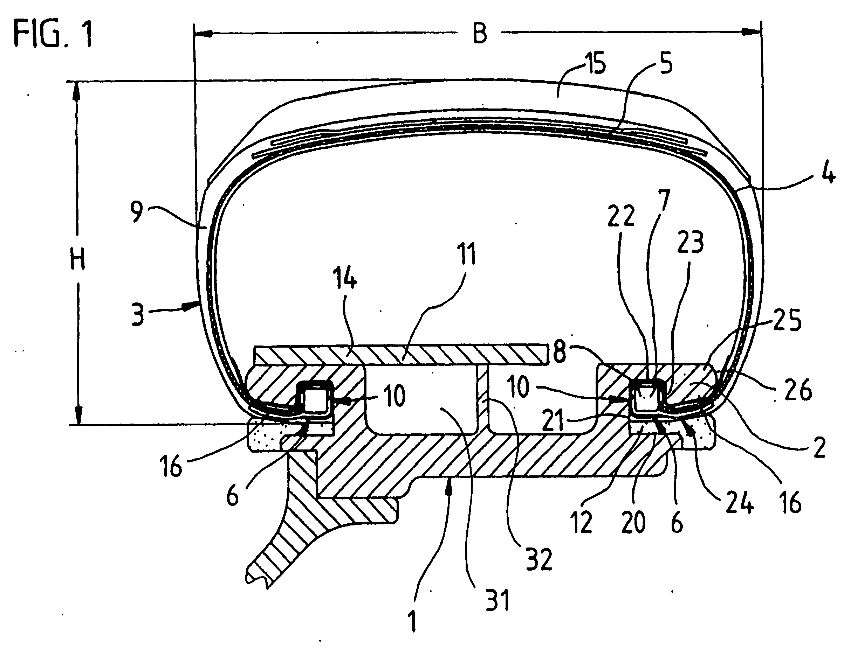

Fig. 1 zeigt ein Fahrzeugrad mit Fahrzeugluftreifen 3 und Felge 1 mit einem Verhältnis von maximaler Höhe H zu maximaler Breite B des Fahrzeugluftreifens H/B ≤ 0,6. Der Fahrzeugluftreifen 3 weist eine über den Umfang des Reifens und vom linken Wulstbereich 6 des Fahrzeugluftreifens zum rechten Wulstbereich 6 reichende, nicht näher dargestellte, Innenschicht auf, über die eine Karkasse 4 radialer Bauart mit beispielsweise einer oder zwei Karkassenlagen aufgebaut ist. Im Bereich der Lauffläche ist radial außerhalb der Karkasse 4 ein Gürtel 5 bekannter Bauart mit beispielsweise zwei Gürtellagen aus in Kautschuk eingebetteten Festigkeitsträgern, z.B. aus Stahlcord, aufgelegt. Der Gürtel reicht über den gesamten Umfang des Reifens hinweg und erstreckt sich in axialer Richtung von einem Reifenschulterbereich in den anderen.

Die Stahlcorde verlaufen im spitzen Winkel von beispielsweise 10-30° zur Umfangsrichtung. Radial außerhalb der Gürtellagen ist es denkbar, eine nicht dargestellte Gürtelbandage mit im wesentlichen zur Umfangsrichtung verlaufenden Festigkeitsträgern, beispielsweise aus Nylon, aufzuwickeln.

Radial außerhalb des Gürtels bzw. der Gürtelbandage ist in bekannter Weise ein über den Umfang des Reifens reichender und sich von Schulterbereich zu Schulterbereich erstreckender Laufstreifen 15 aus Kautschukmaterial aufgelegt. Im Seitenwandbereich 9 ist Kautschukmaterial auf die Karkasse 4 aufgelegt. Das Seitenwandkautschukmaterial reicht vom Schulterbereich bis zum Wulstbereich 6.

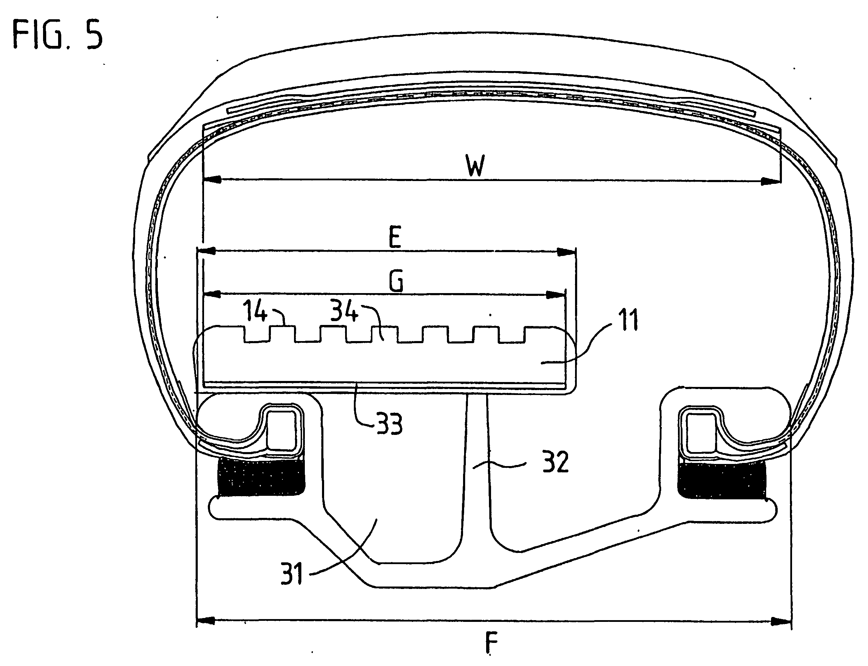

Die einstückig ausgebildete Felge 1 ist an ihren beiden axialen Stirnseiten jeweils mit einer konzentrisch zur Felge angeordneten Ringkammer 10 mit einer radial inneren Ringkammerwand 20, einer axial inneren Ringkammerwand 21, einer radial äußeren Ringkammerwand 22 und einer axial äußeren Ringkammerwand 23 einstückig ausgebildet. Die Ringkammerwand 23 begrenzt das radial nach innen gerichtete Felgenhorn 2. Axial nach innen zwischen Felgenhorn 2 und radial innerer Ringkammerwand 20 ist eine ringförmige Durchgangsöffnung 24 von axial außen zur Ringkammer hin ausgebildet. Das Felgenhorn 2 ist an seiner radial nach innen gerichteten Seite 25 von axial innen nach axial außen konisch erweitert und an seiner Stirnfläche 26 gekrümmt ausgebildet. Ein einteiliger Notlaufstützring 11 mit einer axialen Breite E erstreckt sich - wie in Fig. 5 zu erkennen ist - konzentrisch zur Felge innerhalb des Reifens axial vom axialen Felgenrand in axialer Richtung bis wenigstens zur Mitte der Felgenbreite F..Der Notlaufstützring 11 ist radial außen mit einer Notlauffläche 14 ausgebildet. Die Notlaufoberfläche 14 ist profiliert mit in axialer Richtung voneinander äquidistant zueinander angeordneten Umfangsrippen 34 versehen. Der Stützring stützt sich im axialen Bereich der Position der Ringkammer 10 auf der radial äußeren Seite des Felgenhorns 2 , das die Felge am Fahrzeug zur Fahrzeugaußenseite hin begrenzt, in radialer Richtung ab. Die Notlaufoberfläche erstreckt sich dabei in einer Ausführung soweit in axialer Richtung, daß der Gürtel von der Gürtelkante aus mit 50 bis 100 % seiner Gürtelbreite W, beispielsweise 80%, axial die Notlaufoberfläche überdeckt.

Der Fahrzeugluftreifen 3 umgreift mit seinen unteren Seitenwandbereichen 16 die nach radial innen erstreckten Hörner 2. Die Krümmung der Stirnfläche 6 des Horns entspricht der gewünschten Reifenkontur im Bereich des Homs.

Am Ende des unteren Seitenwandbereiches 16 ist jeweils der Wulstbereich 6 mit zur Innenseite des Reifens ausgebildeter wulstartiger Verdickung 7 ausgebildet. Der Wulst ist mit einem in das Karkassenlagenende eingebetteten elastisch dehnbaren und elastisch stauchbaren Kern 8 ausgebildet. Im montierten Zustand gemäß Fig. 1 füllt der Wulstbereich 6 unter Formschluß zur axial inneren Ringkammerwand 21 und zur radial äußeren Ringkammerwand 22 sowie zur axial äußeren Ringkammerwand 23 ca. 1/2 bis 2/3 des Ringkammerraums. Radial innerhalb des Wulstes ist ein Füllring 12 radial formschlüssig zum Wulstbereich 6 nach radial außen und nach radial innen zur radial inneren Ringkammerwand 20 ausgebildet, der sich in axialer Richtung von der Ringkammerwand 10 über die gesamte axiale Erstreckung des Wulstbereichs 6 durch die Ringöffnung 24 hindurch nach axial außen erstreckt. Der Füllring 12 ist über den gesamten axialen Erstreckungsbereich der Ringkammer und somit des Wulstes an seiner radial äußeren Mantelfläche zylindrisch und axial außerhalb der Ringkammer parallel zur radial inneren Seite des Felgenhorns 25 konisch erweitert ausgebildet. In der Ausführung von Fig.1 erstreckt sich der Füllring 12 in axialer Richtung bis hin zur axialen Position der Stirnseite 26 des Felgenhorns. Der Wulst steht in der Ausführung gemäß Fig. 1 unter Formschluß nach radial außen, nach axial innen und nach axial außen zu den geschlossenen Ringkammerwänden 22, 23, 21 und durch den radialen Formschluß zum Füllring 12, der seinerseits in radialem Formschluß zur geschlossenen Ringkammerwand 20 ausgebildet ist, auch zur Ringkammerwand 20 in radialem Formschluß. Da der Wulst auf seiner gesamten Oberfläche in formschlüssigem Berührkontakt zur einstückig ausgebildeten Ringkammer bzw. zum Füllring 12 und der Füllring 12 innerhalb der Ringkammer seinerseits mit seiner Oberfläche in vollständigem Berührkontakt zu den Ringkammerwänden bzw. zum Wulst ausgebildet ist, ist die Ringkammer vollständig von Wulst und Füllring ausgefüllt. Darüber hinaus steht der untere Seitenwandbereich 16 mit der radial inneren konischen Felgenhornseite 25 und mit der korrespondierend ausgebildeten konischen äußeren Mantelfläche des Füllrings 12 auch im axialen Erstreckungsbereich des Felgenhorns in vollständigem Berührkontakt.

Der vollständige Formschluß des Wulstes zur Felge sichert den Sitz des Reifens auf der Felge während des Fahrens.

Im Bereich der Stirnfläche 26 des Homs 2 der Felge liegt die Reifenseitenwand jeweils lediglich unter Vorspannung an.

Bei Auflage eines Umfangselementes des Reifens auf die Straßenoberfläche wirken resultierende Normalkräfte F zwischen Fahrzeugluftreifen und Straßenoberfläche. Bei der Eindämpfung dieser Kräfte wirkt auf die Seitenwände 9 des Reifens eine resultierende Kraft F_{A}, die im wesentlichen in axialer Richtung wirkt und die Seitenwand leicht weiter verkrümmt. Aufgrund der gewählten Vorspannung zwischen Stirnfläche 26 und Reifen liegt der Reifen in diesem Normallastfall unter Reduzierung der Vorspannung immer noch an der Stirnfläche 26 an. Bei Kurvenfahrten wird im Bereich der besonders stark belasteten Kurvenaußenseite aufgrund der eingeleiteten Kräfte die Vorspannung zwischen Stirnfläche 26 und Reifenseitenwand erhöht. Der Fahrzeugluftreifen 3 wird somit an der besonders stark belasteten Seite durch das Horn versteift. Ein sicheres Handling ist gewährleistet.

Bei starken Stoßwirkungen auf den Reifen wirken stärkere resultierende Kräfte F_{A} auf die Reifenseitenwände. Diese beulen weiter nach axial außen bei der Eindämpfung aus. Der für die flexible Krümmung der Seitenwand hierzu zur Verfügung stehende Seitenwandbereich reicht dabei vom Schulterbereich des Laufstreifens bis über den gesamten gekrümmten Bereich der Stirnfläche 26. Bei starken Stößen hebt die Reifenseitenwand 9 im Bereich der Stirnfläche 26 unter Bildung eines Spaltes zwischen Stirnfläche 26 und Reifenseitenwand ab.

Auch besonders starke auf den Reifen einwirkende Stöße können aufgrund des großen Krümmungsradius R und der sehr langen für die Krümmung zur Verfügung stehenden Bogenlänge der Reifenseitenwand zwischen Reifenschulter und zylindrischer Felgenoberfläche unter geringer Flächenbeanspruchung der gekrümmten Seitenwandoberflächen sicher eingedämpft werden.

Der Notlaufstützring 11 erstreckt sich über den gesamten Umfangsbereich des Reifens. Bei plötzlichem innendruckverlust stützt sich der Reifen mit seinem Laufstreifenbereich auf der Notlauffläche 14 ab. Frühzeitige Zerstörung und Ablösung des Reifens werden vermieden.

Der Notlaufstützring 11 ist aus elastischem Material - beispielweise aus Gummi oder aus gummiähnlichem Kunststoff - ausgebildet, in das eine Lage 33 von parallel zueinander angeordneten, zugfesten Festigkeitsträgern eingebettet ist. Das elastische Material des Notlaufstützrings ist weicher als das Gummimaterial der Lauffläche des Fahrzeugluftreifens. Beispielsweise kann eine Vollsilicamischung bekannter Art, wie sie bei den aus Vollgummi hergestellten Industriereifen Verwendung findet, eingesetzt werden. Die Festigkeitsträger sind Monofilamente oder Korde aus zugfestern Material, wie es beispielsweise zur Herstellung von Reifengürteln eingesetzt wird. Beispielsweise sind die Festigkeitsträger Monofilamente oder Korde aus Aramid, Stahl oder sonstigen geeigneten metallischen oder textilem Material. Die Festigkeitsträger erstrecken sich über den gesamten Umfang des Notlaufstützrings unter einem Winkel zwischen 0° und 30° zur Umfangsrichtung.

Die Lage 33 erstreckt sich über eine Breite G, die sich in axialer Richtung wenigstens zwischen der axialen Position der Gürtelkante und der Mitte der Gürtelbreite erstreckt. Die Felge 1 ist im Bereich der Felgenmitte in ihrem Tiefbett einstückig mit einer Umfangsrippe 32 ausgebildet, die sich radial wenigstens so weit erstreckt, wie das den Notlaufstützkörper stützende Felgenhorn an seiner radialen Außenseite. Der Notlaufstützkörper 11 stützt sich mit seiner in Fig. 5 dargestellten linken Seite auf der radialen, zylindrich ausgebildeten Außenseite des linken Felgenhorns 2 und mit seiner rechten Seite auf der radialen Außenseite der Umfangsrippe 32 reibschlüssig ab

In einer nicht dargestellten Ausführung ist im Notlaufstützring radial auf der Lage von Festigkeitsträgern eine weiter Lage von Festigkeitsträgern in einer der genannten Ausbildungsmöglichkeiten eingebettet. Die Festigkeitsträger der einen Lage sind parallel oder - falls zur Erhöhung der Steifigkeit erforderlich - nicht parallel zu denen der ersten Lage angeordnet. Dabei kann es sinnvoll sein, die Steigungsrichtung der Festigkeitsträger zur axialen Richtung in der einen Lage entgegengesetzt zu der der Steigungsrichtung der Festigkeitsträger der anderen Lage auszubilden. In gleicher Weise ist es in weiteren Ausführungen möglich auf die zweite Lage noch eine oder mehrere weiter Lagen von Festigkeitsträgern in denStützring einzubetten.

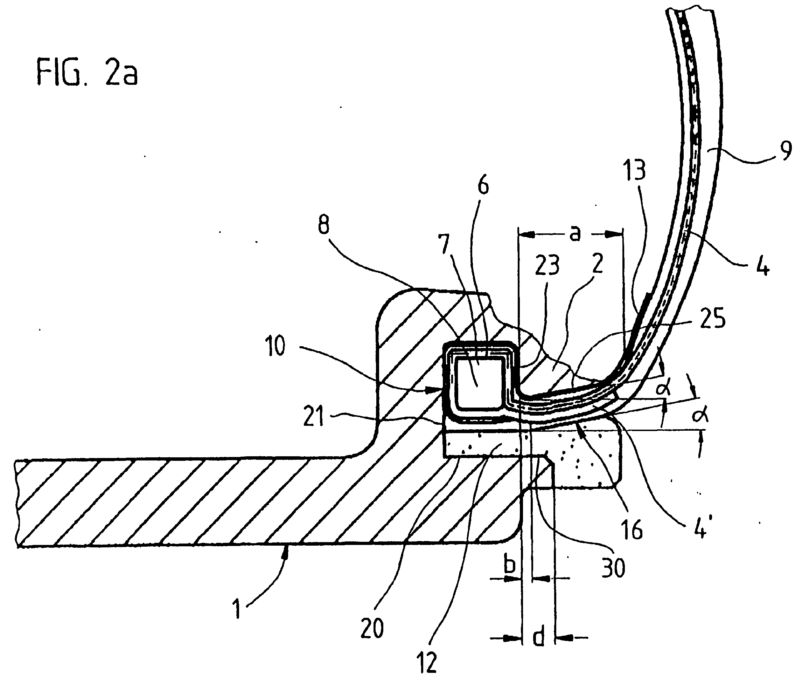

Fig. 2a zeigt eine vergrößerte Detaildarstellung des äußeren Randbereichs der Felge von Fig.1. In Fig.2a ist erkennbar, daß sich die Innenseite 25 des Felgenhorns von der Ringkammerwand 23 ausgehend unter Einschluß eines Winkels α zur Radachse nach axial außen hin bis zur gekrümmten Stirnfläche 26 des Felgenhorns 2 konisch erweitert. Die radial äußere Mantelfläche des Füllrings 12 ist von der Ringkammerwand 21 ausgehend über den gesamten axialen Erstreckungsbereich der Ringkammer hinweg bis zur Ringkammerwand 23 und in axialer Verlängerung aus der Ringkammer bis zu einem axialen Abstand b zur Ringkammerwand 23 zylindrisch ausgebildet. Ausgehend von einer Kreislinie im Abstand b zur Ringkammerwand 23 ist die radial äußere Mantelfläche des Füllrings 12 in axialer Richtung nach außen parallel zur Innenseite 25 des Felgenhorns ebenfalls unter Einschluß des Winkels α zur Radachse nach axial außen hin konisch erweitert ausgebildet. Der Füllring erstreckt sich ebenso wie das Felgenhorn noch über einen Abstand a von der Ringkammerwand 23 axial nach außen. Der Füllring 12 ist axial verschiebbar auf einer zylindrischen Lagerfläche 30 der Felge gelagert. Im innern der Ringkammer bildet die Lagerfläche 30 die radial innere Ringkammerwand 20. Nach axial außen erstreckt sich die Lagerfläche 30 bis in einen Abstand d von der Ringkammerwand 23. Axial außerhalb des Abstandes d ist der Füllring nach radial innen zu einer Schulter verdickt ausgebildet und liegt mit dieser an einer korrespondierend ausgebildeten Schulter der Felge an. Die Abstände a,b,d sind so gewählt, daß a größer als d und d größer als b ist. Der Winkel α liegt zwischen 2 und 20 °. Im gezeichneten Ausführungsbeispiel liegt er bei ca. 10°. Auf diese Weise umschließen der Wulst mit seiner Verdickung 7 und der sich anschließende untere Seitenwandbereich 16 zwischen innerer Felgenhornfläche 25 und Füllring das Felgenhorn zwangsgeführt, wodurch die Verankerung des Reifens in der Felge zusätzlich gesichert wird.

Der Füllring ist aus Gummi oder aus einem elastischen Kunststoff mit selbsthemmender Oberfläche ausgebildet. Es ist auch denkbar, den Füllring aus einem nichtelastischen Kunststoff oder Metall herzustellen. Soweit im Einzelfall erforderlich, ist es auch möglich, den Füllring im montierten Zustand mit seiner Schulter an der korrespondierenden Schulter der Felge beispielsweise durch Verschraubung zusätzlich axial zu fixieren.

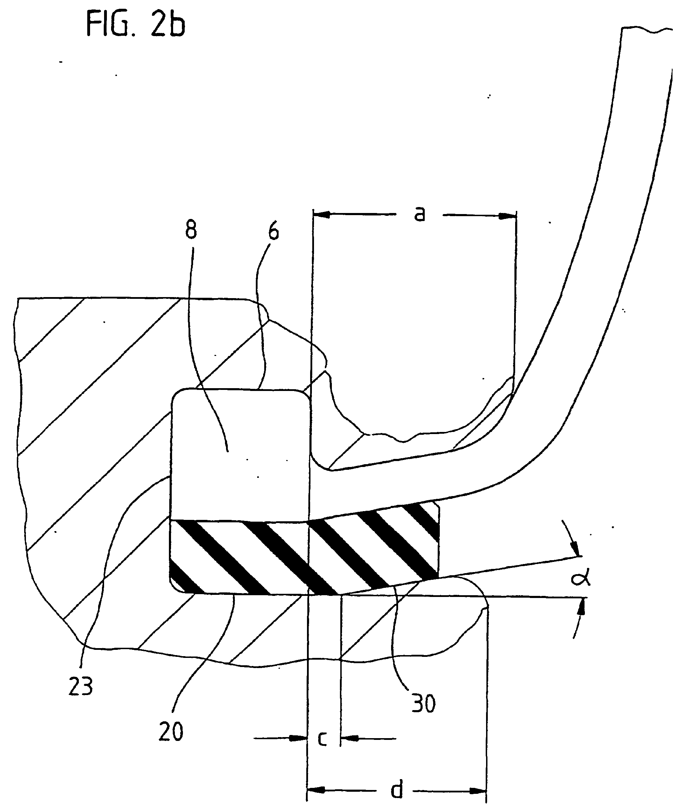

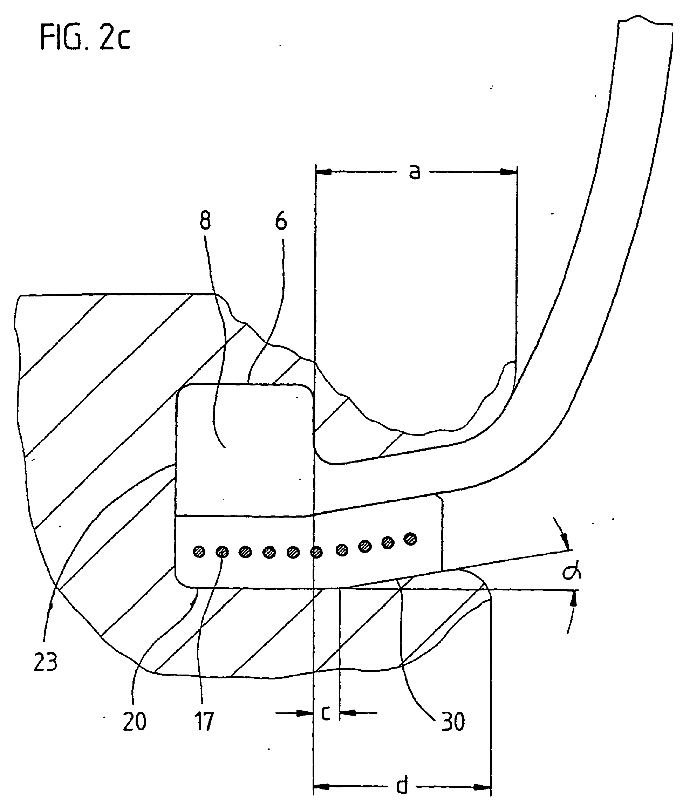

In den Fig.2b und 2c sind alternative Ausführungen des Füllrings 12 dargestellt. Die Lagerfläche 30 erstreckt sich axial bis zu einem Abstand c, der kleiner oder gleich dem Abstand a ist, von der Ringkammerseitenwand 23 nach außen. Die radial äußere Mantelfläche des Füllrings ist ab der axialen Position der Ringkammerseitenwand 23 ebenfalls konisch unter dem Steigungswinkel α verlaufend ausgebildet. Die radial Innere Mantelfläche des Füllrings ist ebenso wie die korrespondierend ausgebildete Lagerfläche 30 ab einer axialen Position im Abstand c von der Ringkammerseitenwand nach axial außen ebenso unter dem Winkel α zur Radachse konisch erweitert ausgebildet. Der Abstand c ist kleiner a. Durch diese konische Ausbildung wird der elastische Füllring in seiner montierten Position zusätzlich durch axialen Formschluß gesichert.

In Fig2c ist ein Füllring wie in Fig2b dargestellt, der jedoch im elastischen Gummi- oder Kunststoffmaterial eingebettete im wesentlichen in Umfangsrichtung verlaufende Festigkeitsträger 17 enthält. Die Festigkeitsträger geben dem Füllring zusätzlichen Halt auf der Lagerfläche 30. Die Festigkeitsträger 17 können mehrere nebeneinander angeordnete in Umfangsrichtung gewickelte zugfeste Festigkeitsträger sein. In einer anderen Ausführung ist ein oder mehrere nebeneinander angeordnete Festigkeitsträger kontinuierlich wendelförmig um die Achse des Füllrings von einem axialen Ende zum anderen axialen Ende des Füllrings gewickelt. Die Abstände zwischen den benachbarten Wicklungen sind äquidistant. Soweit zur Erzielung einer noch sichereren Fixierung des Füllrings auf der Lagerfläche 30 sinnvoll, können die Abstände auch unterschiedlich gewählt sein. Die Festigkeitsträger sind Monofilamente oder Multifilamente aus Stahl. In einer anderen Ausführung sind die Festigkeitsträger textile Monofilamente oder Multifilamente. Es ist auch denkbar die Festigkeitsträger 17 aus Gewebestreifen auszubilden. Die Verstärkung des Füllrings 12 durch Festigkeitsträger in der beschriebenen Art ist auch beim Ausführungsbeispiel von Fig.2a möglich.

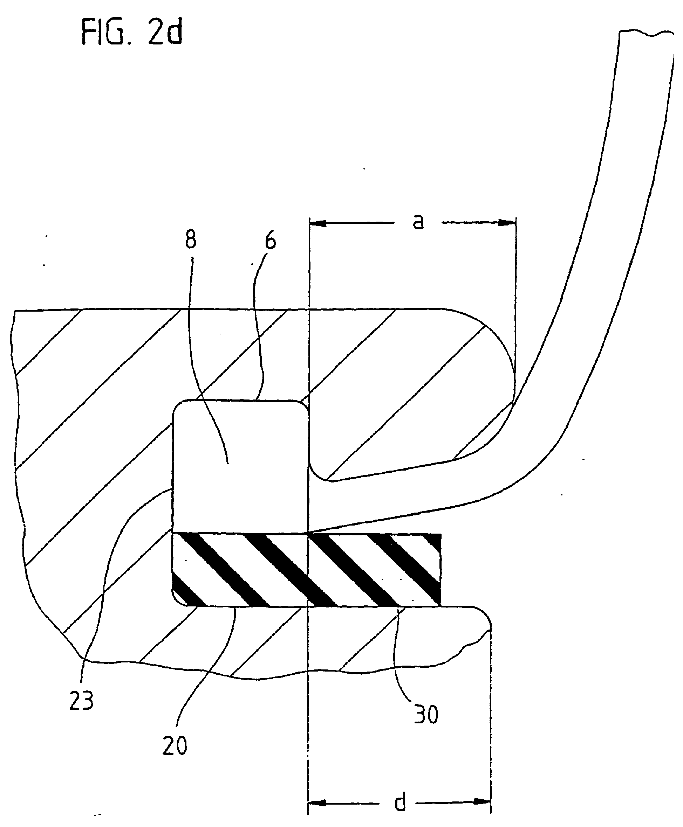

Fig. 2d zeigt eine weitere alternative Ausführung, bei der der Füllring auch außerhalb der Ringkammer zylindrisch ausgebildet ist.

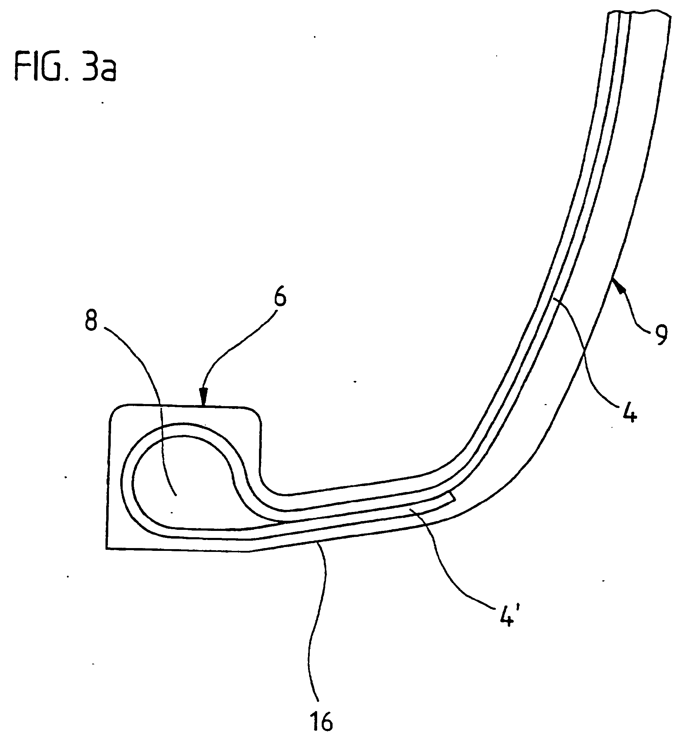

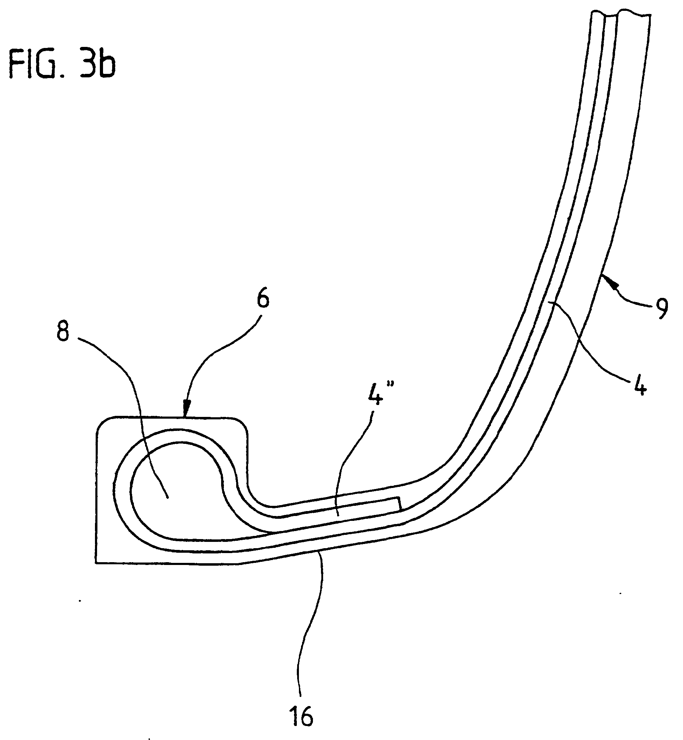

Der Wulstkern 8 wird, wie in den Fig.1,2 und 3a dargestellt ist, durch Einbettung des Kerns 8 in die Karkasse 4 durch Umschlag der Karkasse 4 um den Kern von innen nach außen oder, wie im Ausführungsbeispiel von Fig. 3b dargestellt ist, von außen nach innen verankert. Die Karkasse 4 ist eng um den Kem 8 gewickelt und der Umschlag 4' ist ebenso wie im anderen Ausführungsbeispiel der Umschlag 4" im Anschluß an den Kem 8 in unmittelbarem Kontakt zum Hauptteil der Karkasse. Der Kem 8 ist tröpfchenförmig zum Berührungspunkt zwischen Umschlag und Hauptteil der Karkasse verjüngt ausgebildet. Zur Ausbildung des Kerns 8 wird ein elastisches Gummimaterial mit einer Shore-A-Härte von 80 bis 100, vorzugsweise 85 bis 90 - im Ausführungsbeispiel von Figur 1 mit einer Shore-A-Härte von 87 - gewählt, das eine elastische Dehnbarkeit in Umfangsrichtung des Kerns von 5 bis 30%, für Standard-Reifendimensionen von 10 bis 20%, und eine elastische Stauchbarkeit von1 bis 5%, für Standard-Reifendimensionen von 2,5 bis 3,5 Prozent, aufweist.

Der Kern wird durch Extrusion durch injection moulding oder vergleichsweise bekannte Techniken hergestellt.

Es ist auch denkbar, den Wulst kemlos auszubilden, wobei auch in diesem nichtdargestellten Ausführungsbeispiel das Gummimaterial des Wulstes so gewählt wird, daß der Wulst die genannten Dehnungs- und Stauchungseigenschaften in Umfangsrichtung aufweist.

Soweit der Abrieb zwischen Felgenhorn und unterer Seitenwand unerwünscht groß wird, ist es möglich, wie in Figur 1 und 2a beispielhaft dargestellt, zusätzlich zwischen Felgenhorn und Wulst einen zusätzlichen Streifen 13 von abriebfestem Material, beispielsweise von abriebfestem Gummi oder Kunststoff auszubilden. Der abriebfeste Streifen kann bis in die Ringkammer reichen und dort um den Wulst umgeschlagen sein.

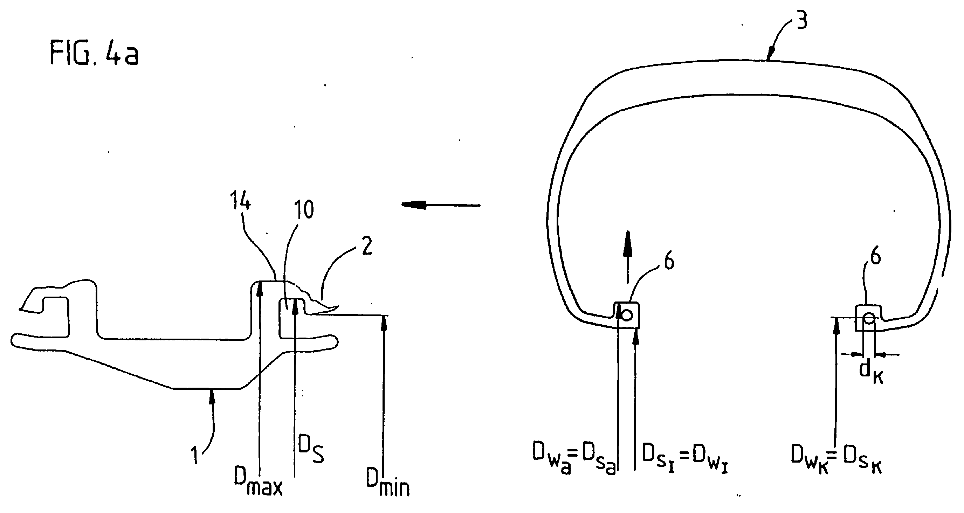

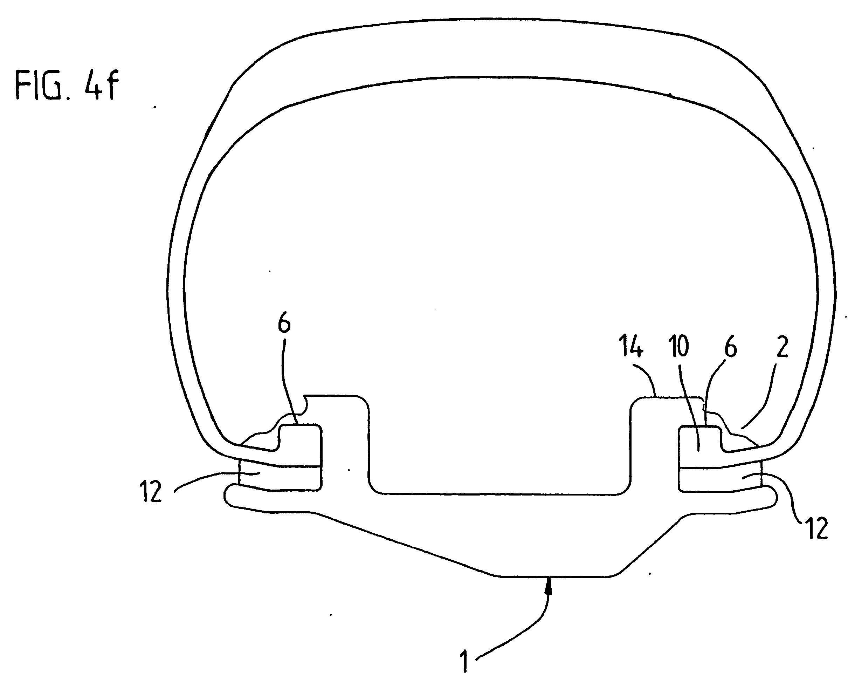

Anhand der schematischen Darstellungen der Figuren 4a bis 4e wird im Folgenden die Montage des Reifens auf einer Felge beschrieben. Die Notlaufstützflächen 14 weisen einen maximalen Außendurchmesser Dmax, die beiden Felgenhörner einen minimalen Innendurchmesser Dmin auf. Der Reifenwulst ist in Fig.4a im ungedehnten und ungestauchten Zustand. Sein Außendurchmesser Dwa entspricht dem Durchmesser der radial äußeren Ringkammerwand 22 und somit dem äußeren Durchmesser des Wulstes Dsa in dessen Sitzposition in der Ringkammer. Sein Innendurchmesser Dwi entspricht dem Durchmesser der radial äußeren Mantelfläche des Füllrings 12 in der Ringkammer und somit dem inneren Durchmesser des Wulstes Dsi in dessen Sitzposition in der Ringkammer. Der Kem mit einer Dicke d, beispielsweise ist d= 10mm, in radialer Richtung hat in der radialen Position der halben radialen Dicke einen mittleren Kemdurchmesser Dwk durch die Reifenachse, der dem mittleren Kemdurchmesser Dsk in der Sitzposition des Wulstes in der Ringkammer entspricht. Dmax ist größer als Dsa, Dsa ist größer als Dsk, Dsk ist größer als Dmin, Dmin ist größer als Dsi.

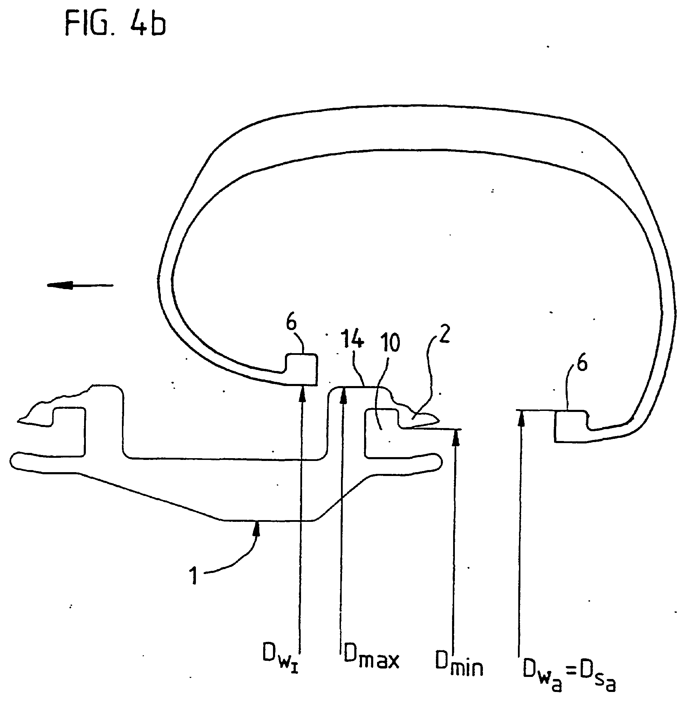

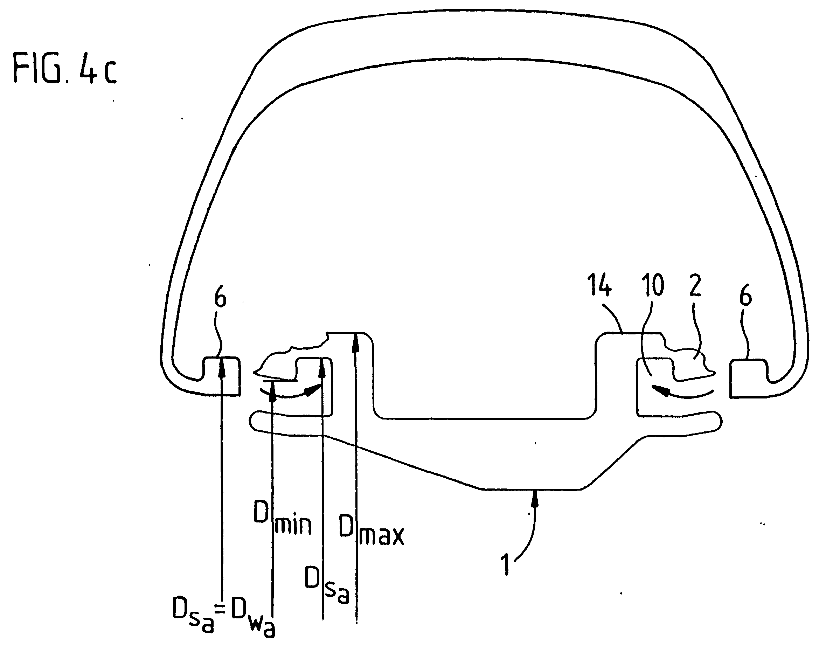

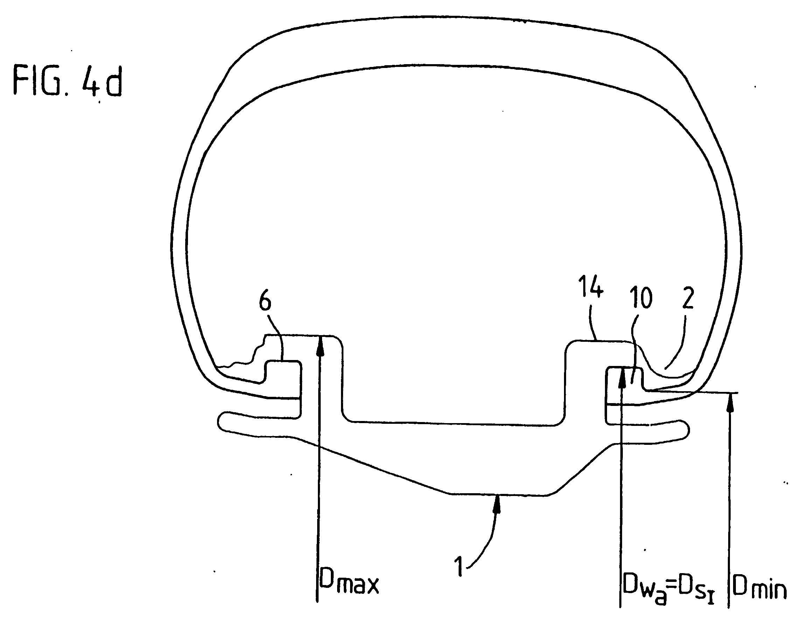

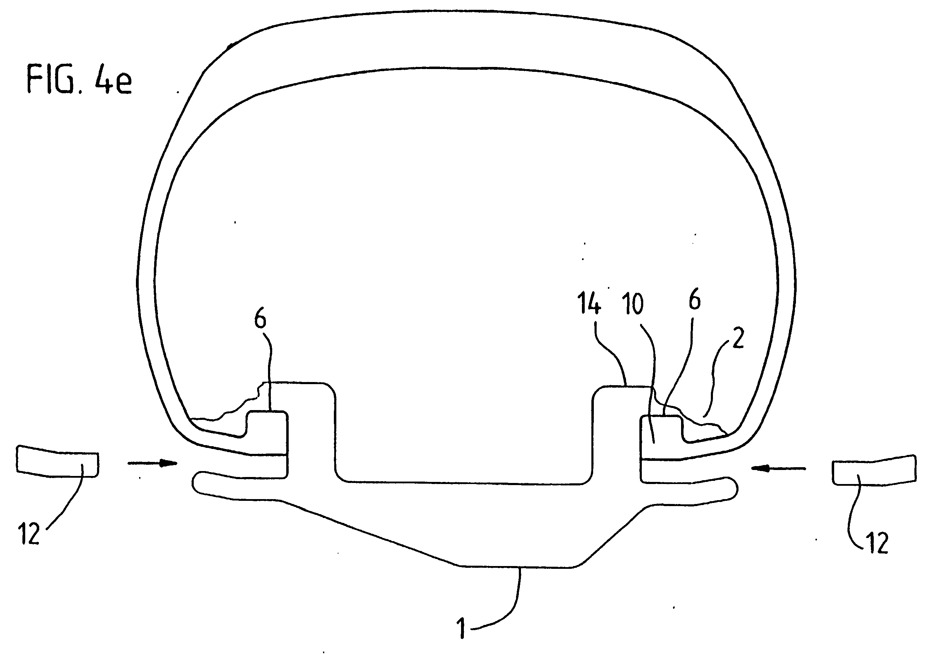

Zur Montage wird zunächst der Notlaufstützring 11 konzentrisch in seine Sitzposition auf der Felge geschoben und befestigt.. Danach wird der Reifen 3 konzentrisch zur Felge an die Felge in den Figuren von rechts axial herangeführt. Der linke Wulst wird entgegen der elastischen Rückstellkräfte des Wulstes in Umfangsrichtung soweit gedehnt, daß der Innendurchmesser Dwi des Wulstes größer als der maximale Außendurchmesser Dmax der Notlaufstützflächen ist. Danach wird, wie in Figur 4b dargestellt ist , der Reifen 3 weiter konzentrisch zur Felge axial zur Felge hinbewegt, wobei der linke Wulst unter Beibehaltung seines gedehnten Zustandes mit Spiel zu den Notlaufstützflächen 14 axial über die Felge und den Stützkörper geschoben wird. Sobald der linke Wulst eine Position auf der linken Seite axial außerhalb des linken Felgenhorns erreicht hat wird der Wulst unter Ausnutzung der elastischen Rückstellkräfte wieder in seiner Umfangslänge soweit zurückgestellt, daß er wieder den ungedehnten und ungestauchten Zustand einnimmt. In diesem Zustand entspricht Dwi wieder Dsi, Dwa wieder Dsa und Dwk entspricht ebenfalls wieder dem mittleren Durchmesser Dsk des Kerns in dessen Sitzposition in der Ringkammer. Wie durch die Pfeildarstellung von Fig 4c dargestellt, werden beide Wülste nun entgegen der elastischen Rückstellkräfte in ihrer Umfangslänge soweit gestaucht, daß der Außendurchmesser Dwa des Wulstes kleiner als der minimale Felgenhorndurchmesser Dmin ist.in diesem Zustand werden die Wülste mit Spiel zum Felgenhorn axial in die jeweilige Ringkammer eingeführt. Unter Ausnutzung der elastischen Rückstellkräfte werden die Wülste wieder in ihrer Umfangslänge soweit zurückgestellt, daß sie wieder den ungedehnten und ungestauchten Zustand einnehmen. In diesem Zustand entspricht Dwi wieder Dsi, Dwa wieder Dsa und Dwk entspricht ebenfalls wieder dem mittleren Durchmesser Dsk des Kerns in dessen Sitzposition in der Ringkammer. Die Wülste sitzen ungedehnt und ungestaucht in der Ringkammer. Dieser Zustand ist in Fig.4d dargestellt. Wie in Fig4e dargestellt ist, wird nun jeweils ein Füllring 12 von axial außen zwischen unterem Seitenwandbereich 16 des Reifens und Lagerfläche 30 axial soweit eingeführt, daß die Ringkammer vollständig von Wulst und Füllring ausgefüllt ist. Der vollständige Formschluß zwischen einstückiger Ringkammer und Wulst ist hergestellt.

Zur Demontage wird entsprechend zunächst der Füllring axial nach außen entfernt. Danach werden die Wülste soweit gestaucht, daß sie mit Spiel zum Felgenhorn aus der Ringkammer gezogen werden können. Nach der Rückstellung der Umfangslänge wird ein Wulst soweit gedehnt, daß er mit Spiel zu den Notlaufstützflächen axial von der Felge gezogen werden kann.

Danach kann - soweit es wünschenswert erscheint - der Notlaufstützkörper entfernt und/oder gegen einen anderen ausgetauscht werden.

Es ist auch denkbar, den Reifen zur Montage anstatt ihn axial zu verschieben, zunächst um 90 ° zu drehen und dann zu dehnen und im gedehnten Zustand in radialer Richtung auf die Felge zu schieben, um ihn dort wieder um 90 ° zurückzudrehen, so daß sich die beiden Wülste jeweils axial außerhalb der Felge befinden. Die weitere Montage erfolgt wie oben beschrieben.

Im einem Ausführungsbeispiel ist der Durchmesser Dmax beispielsweise um das 1,2-fache größer als der Innendurchmesser Dsi des Wulstes in der Sitzposition in der Ringkammer und der minimale Felgenhorndurchmesser ist um den Faktor 1,025 kleiner als der Außendurchmesser Dsa des Wulstes in der Sitzposition in der Ringkammer. Als Gummimaterial des Wulstes wird ein Gummimaterial mit einer Dehnungsfähigkeit und mit einer Stauchbarkeit gewählt, die ein solches Dehnen und Stauchen des Wulstes in Umfangsrichtung erlauben, daß der Wulst über die Notlaufstützfläche 14 und in die Ringkammer mit Spiel axial bewegt werden können. Beispielsweise wird ein bekanntes Gummimaterial verwendet, das eine Umfangsdehnung des Wulstes um 25% und eine Umfangsstauchung um 2,7% ermöglichen.

Die Notlaufstützflächen können auch mit einem größeren oder kleineren maximalen Außendurchmesser Dmax entsprechend den individuell einzustellenden Notlaufeigenschaften eines Reifens ausgebildet sein. Der maximale Durchmesser Dmax der Notlaufstützflächen ist dabei bei Standardreifen optimalerweise um einen Faktor 1,1 bis 1,2 größer als der Innenringdurchmesser Dsi des Wulstkems im montierten Zustand des Fahrzeugrades. Er kann in Spezialfällen jedoch auch um einen Faktor zwischen 1,05 und 1,3 größer sein als der Innenringdurchmesser Dsi des Wulstkems im montierten Zustand des Fahrzeugrades. Als Gummimaterial des Wulstes wird hierfür jeweils ein Gummimaterial mit einer Dehnungsfähigkeit und mit einer Stauchbarkeit gewählt, die ein solches Dehnen und Stauchen des Wulstes in Umfangsrichtung erlauben, daß der Wulst über die Notlaufstützfläche 14 und in die Ringkammer mit Spiel axial bewegt werden können. Dementsprechend wird der Wulst, der im montierten Zustand des Fahrzeugrades ungedehnt und ungestaucht ist, derart ausgebildet, daß er eine Dehnbarkeit zwischen 10 und 20 % und eine Stauchbarkeit von 2,5 bis 3,5 % bei Standardreifen und in den Spezialfällen eine Dehnbarkeit zwischen 5 und 30 % und eine Stauchbarkeit zwischen aufweist 1 bis 5% aufweist.

Es ist auch denkbar nach Einführen des Wulstes in die Ringkammer einen Füllring durch Einpritzen von aushärtbarem Kunststoffmaterial von axial außen durch die Öffnung der Ringkammer einzubringen.

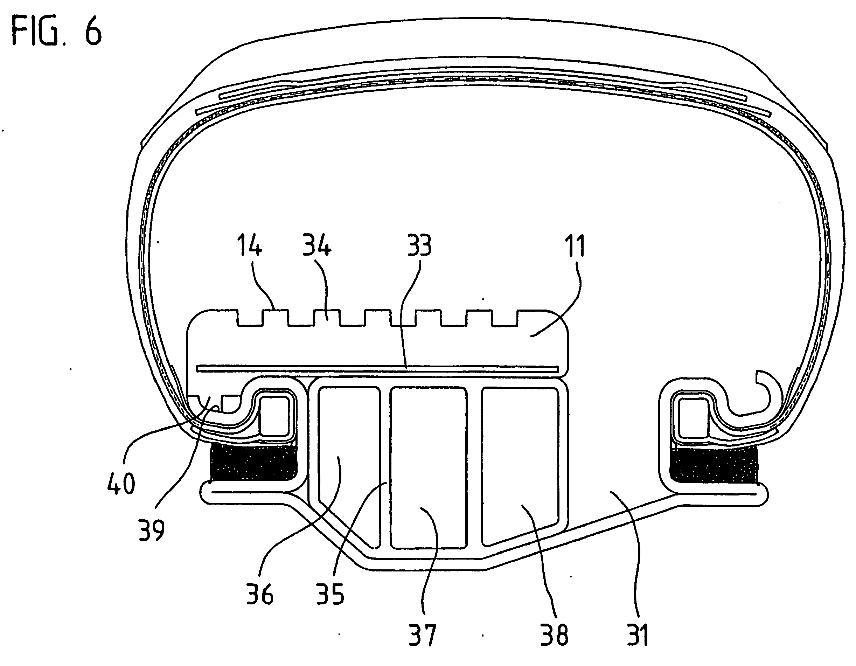

Fig 6 zeigt ein weiteres Ausführungsbeispiel eines Fahrzeugrades, bei dem im Tiefbett 31 der Felge 1 formschlüssig ein zusätzlicher ringförmiger Stützkörper 35 montiert ist. Der Stützkörper 35 ist aus Gummi, Kunststoff oder Metallblech in Leichtbauweise oder aus einem anderen geeigneten Material mit geringem Gewicht, mit hoher radialer Druckfestigkeit, hoher Ermüdungsfestigkeit und guter Temperaturstabilität ausgebildet und erstreckt sich radial wenigstens so weit, wie sich das den Notlaufstützkörper stützende Felgenhorn an seiner radialen Außenseite radial erstreckt. An seiner radialen Außenseite ist er zylindrisch ausgebildet. Er weist eine Struktur mit mehreren - z B mit 3 - in axialer Richtung benachbarten, ringförmigen Hohlkammern 36,37,38 auf. Der Notlaufstützring 11 stützt sich mit seiner in Fig. 6 dargestellten linken Seite auf der radialen Außenseite des linken Felgenhorns 2 und mit seiner rechten Seite auf der radialen Außenseite der Umfangsrippe 32 reibschlüssig ab.

Der Stützring ist in den oben genannten Ausführungsbeispieln reibschlüssig auf dem Felgenhorn 2 und auf dem Stützkörper 35 bzw auf der Umfangsrippe 32 gelagert. Der Reibschluß kann beispielsweise durch Ausbildung des Notlaufstützkörpers mit Preßpassung zur radialen Außenseite des Felgenhorns und des Stützkörpers 35 bzw der Umfangsrippe 32 erzeugt werden

Wie am Beispiel von Fig.6 dargestellt, ist es in einer anderen Ausführung auch möglich in beiden Fällen den Notlaufstützring auch formschlüssig auf der radialen Außenseite des Felgenhorns 1 zu befestigen. Beispielsweise ist hierzu - wie in Fig. 6 dargestellt ist - in der radialen Außenseite des Felgenhorns 1 eine Umrangsrille 39 ausgebildet, in die formschlüssig eine korrespondierend hierzu am Notlaufstützring ausgebildete Umfangsrippe 40 beim axialen Aufschieben des Notlaufstützrings in seine Notlaufstützposition einschnappend eingreift.

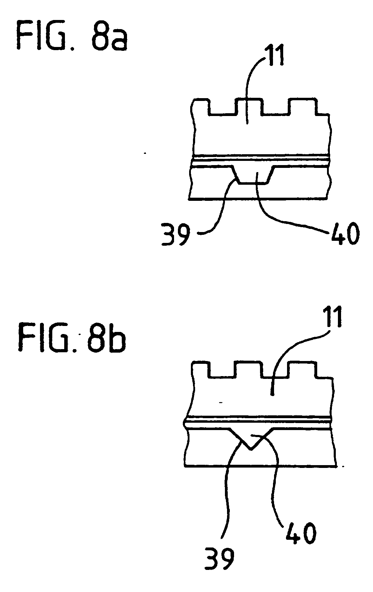

In Fig. 8a und 8b sind beispielhaft weitere Ausführungsformen der Umfangsrippe 40 und der Umfangsrille 39 dargestellt. In Fig.8a weisen Umfangsrippe 40 und Umfangsrille 39 einen trapezförmigen Querschnitt, in Fig.8b weisen Umfangsrippe 40 und Umfangsrille 39 einen dreieckförmigen Querschnitt auf. In weiterer nicht dargestellter Ausführungsform weisen Umfangsrippe 40 und Umfangsrille 39 einen abgerundeten Querschnitt auf. Zum Formschluß durcheinschnappendes Eingreifen der Umfangsrippe 40 in die korrespondierende Umfangsrille 39 beim axialen Aufschieben des Notlaufstützrings auf die Felge kann die Umfansrille 39 auf der radialen Außenseite des Felgenhorns 1 oder beispielsweise auch auf dem zusätzlichen Stützkörper 35 bzw auf der Umfangsrippe 32 ausgebildet.

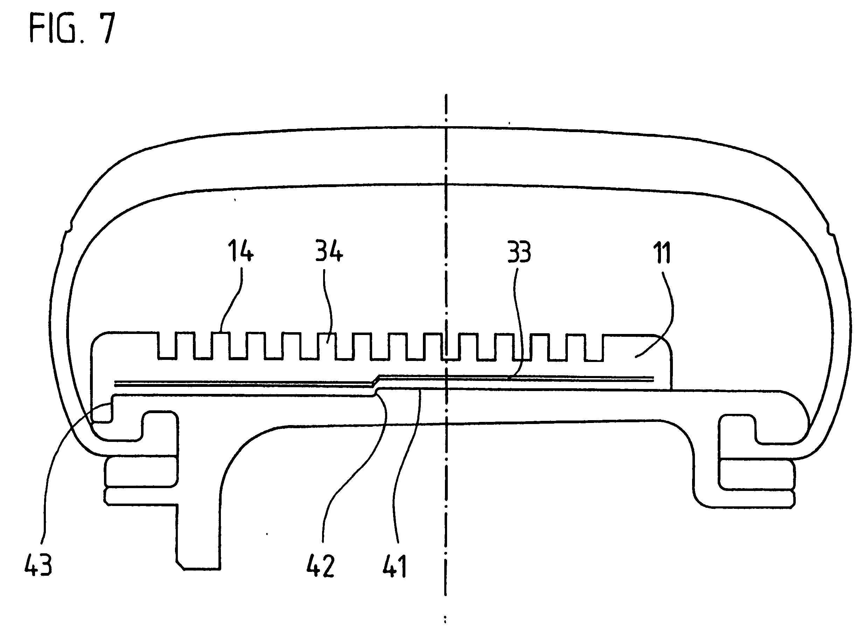

Fig.7 zeigt ein Ausführungsbeispiel, bei dem die Felge mit flachem Bett 41 ausgebildet ist, das sich mit seiner radialen Oberfläche radial wenigstens so weit erstreckt, wie sich das den Notlaufstützring stützende Felgenhorn an seiner radialen Außenseite radial erstreckt. An seiner radialen Außenseite ist es beidseitig einer ringförmigen jeweils zylindrisch ausgebildet, wobei der Außendurchmesser rechts der Anschlagschulter 42 größer als der links der Anschlagschulter 42 ausgebildet ist. Links der Anschlagschulter 42 ist der Außendurchmesser so groß wie der Außendurchmesser der radialen Oberfläche des linken, den Notlaufstützkörper stützenden Felgenhorns. Die radial innere Seite des Notlaufstützrings ist dieser Außenkontur des Felgenhorns und des flachen Bettes korrespondierend ausgebildet, so daß der Notlaufstützring 11 von links auf die Felge zur Montage soweit aufgeschoben werden kann, bis die an der Innenseite des Notlaufstützrings ausgebildete Anschlagschulter in Anschlag mit dem korrespondierenden Anschlag 42 der Felge kommt. Der Notlaufstützring 11 stützt sich mit seiner in Fig. 7 dargestellten linken Seite auf der radialen Außenseite des linken Felgenhorns 2 und daran anschließend auf der radialen Außenseite des Flachbetts 41 reibschlüssig ab.

Zur sichereren Fixierung der Umfangsposition kann der Notlaufstützring an seiner axialen Außenseite mit einer nur über eine Teil des Umfangs ausgebildeten nach radial innen gerichteten Nase 43 versehen werden, die beim axialen Aufschieben des Notlaufstützrings in eine korrespondierende Axialnut in der Felgenoberfläche eingreift und den Stützring in Umfangsrichtung festlegt.

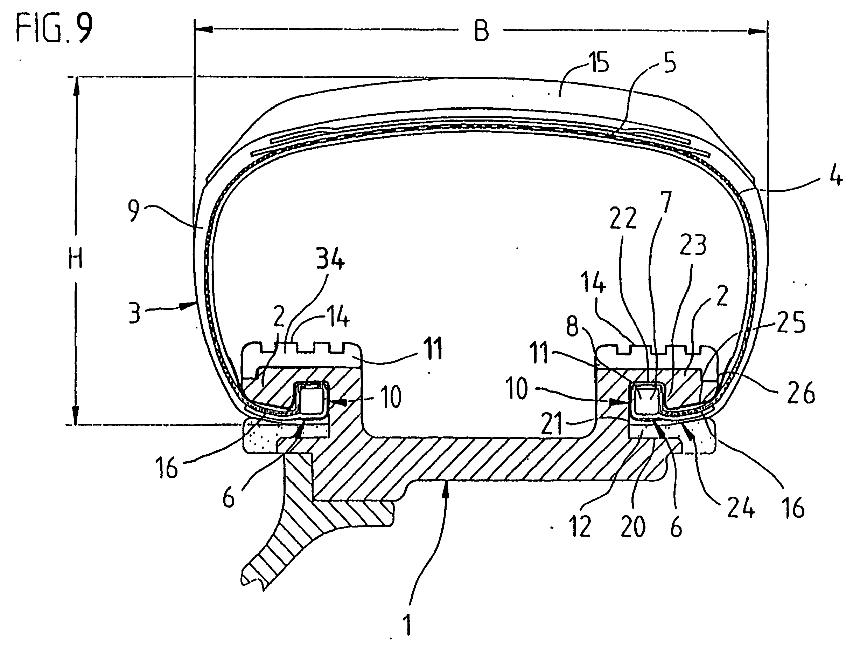

Fig. 9 zeigt eine Ausführung eines Fahrzeugrades gemäß Fig.1 jedoch mit zwei Nottaufstützringen. Jeweils ein einteiliger Notiaufstützring 11 mit einer axialen Breite E erstreckt sich konzentrisch zur Felge innerhalb des Reifens axial von einem axialen Felgenrand in axialer Richtung zur Mitte der Felgen, endet jedoch vor Erreichen der Mitte Felgenbreite F. Jeder Notlaufstützring 11 ist radial außen mit einer Notlauffläche 14 ausgebildet. Die Notlaufoberfläche 14 ist jeweils profiliert mit in axialer Richtung voneinander äquidistant zueinander angeordneten Umfangsrippen 34 versehen. Jeder Stützring stützt sich im axialen Bereich der Position der Ringkammer 10 auf der radial äußeren Seite des zugehörigen Felgenhorns 2 , das die Felge am Fahrzeug zur Fahrzeugaußenseite hin begrenzt, in radialer Richtung ab. Die Notlaufoberfläche erstreckt sich dabei in einer Ausführung soweit in axialer Richtung, daß der Gürtel von der Gürtelkante aus mit 10 bis 40 % seiner Gürtelbreite W, beispielsweise 30%, axial die Notlaufoberfläche überdeckt.

Zwecks vereinfachter Darstellung sind die Profilrippen 34 der Stützfläche in Fig.1 bis 9 entweder gar nicht oder mit im wesentlichen rechteckiger Querschnittskontur dargestellt.

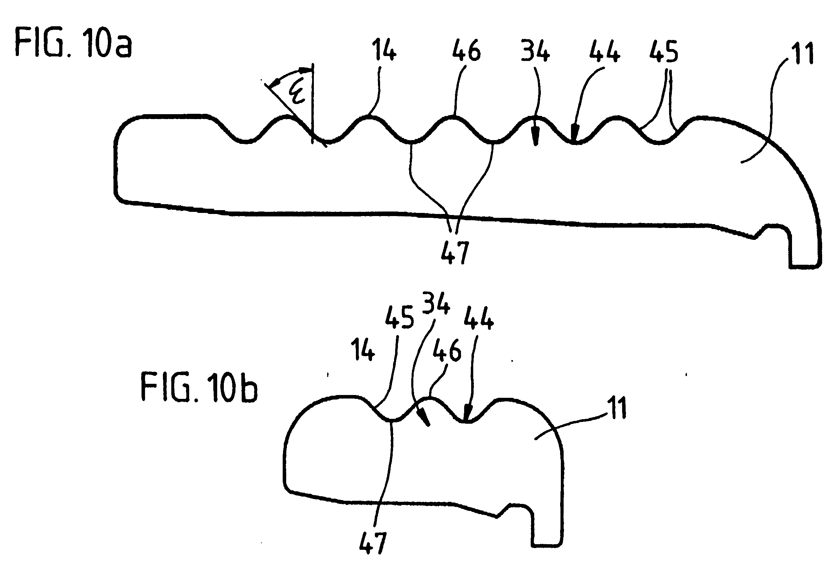

Die Fig. 10 bis 13 zeigen Ausführungsbeispiele der erfindungsgemäßen Profilierungen des radialen Außenbereichs der Stützringe, die sinngemäß bei allen oben genannten Ausführungsbeispielen ausgebildet werden.

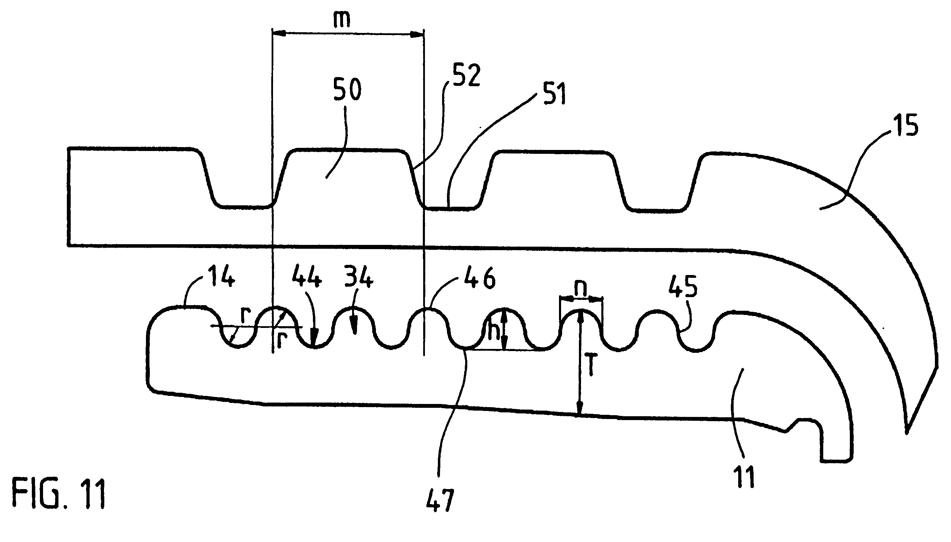

Fig. 10b zeigt ein Ausführungsbeispiel mit schmalem Stützring, wie er beispielsweise in der Ausführung von Fig. 9 dargestellt ist, Fig. 10a zeigt ein Ausführungsbeispiel mit breitem Stützring, wie er beispielsweise in den von Fig.1 bis 8 dargestellt ist. Die Fig. 10a und 10b zeigen einen Querschnitt des Stützrings in einer Schnittebene, in der die Achse des Stützrings liegt. Dabei ist der Stützring 11 an seiner radial äußeren Mantelfläche mit in Umfangsrichtung des Stützrings sich über den Umfang erstreckende nebeneinander äquidistant angeordneten parallelen Profilrillen 44 ausgebildet, wobei jeweils zwischen zwei benachbarten Profilrillen 44 eine zu diesen parallele in Umfangsrichtung des Stützrings sich über den Umfang erstreckende Profilrippe 34 ausgebildet ist. Vom konkav gekrümmten Profilrillengrund 47 erhebt sich dabei die Seitenwand 45 der Profilrippe unter Einschluß eines sich in radialer Richtung verändernden Neigungswinkels ε zur Radialen in radialer Richtung nach außen um dann in die konvex gekrümmte radiale Außenseite 46 der Profilrippe 34 überzugehen. Der Konturverlauf von Profilrillengrund 47 einer ersten Profilrille, erster Seitenwand 45 der Profilrippe, radialer Außenseite 46 der Profilrippe 34, zweiter Seitenwand 45 der Profilrippe und Profilrillengrund 47 einer zweiten Profilrille zweier benachbarter Profilrillen, die zwischen sich die Profilrippe einschließen ist beispielsweise, wie in Fig.10 dargestellt ist, sinusförmig. Ein alternativer Konturverlauf ist am Beispiel eines breiten Stützelements in Fig. 11 dargestellt. Dort entspricht der Konturverlauf in axialer Richtung aneinander gereihten Halbkreisen mit beispielsweise gleichem Radius für den konvex verlaufender halbkreisförmiger Krümmungsbereich und für den konkav geformten halbkreisförmigen Krümmungsverlauf.

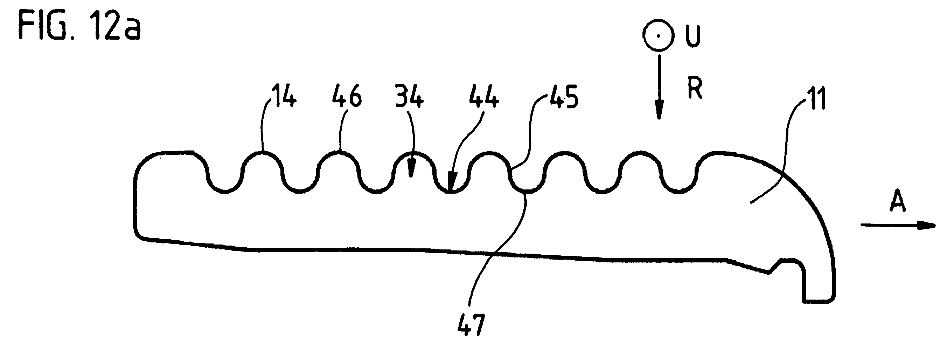

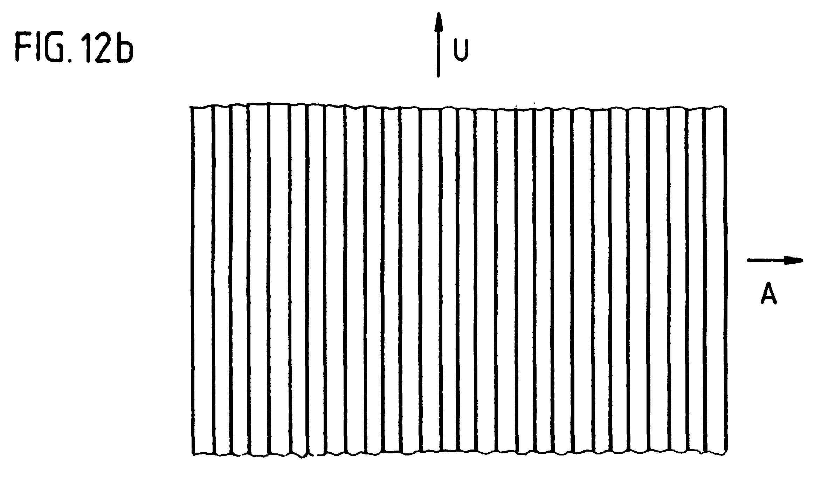

Fig. 12 a,b,c zeigt am Beispiel einer Ausführung mit der Kontur von Fig. 11 den Verlauf der Profilrillen und Profilrippen in Umfangsrichtung. Dabei ist in Fig.12b und 12c jeweils eine Auschnittsdarstellung der radialen Draufsicht auf den Stützring von Fig.12a dargestellt. In Fig. 12b sind die Profilrippen und Profilrillen des Stützkörpers geradlinig in Umfangsrichtung verlaufend, in Fig.12c in einer anderen Ausführung welllenförmig verlaufend dargestellt. Die Wellenform ist mit gleichen Amplituden zur Umfangsrichtung und über den Umfang mit konstanter Wellenlänge ausgebildet.

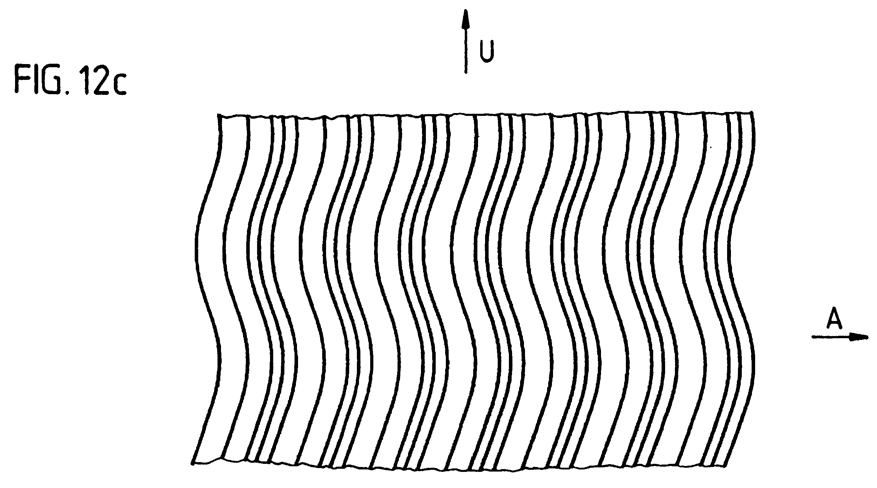

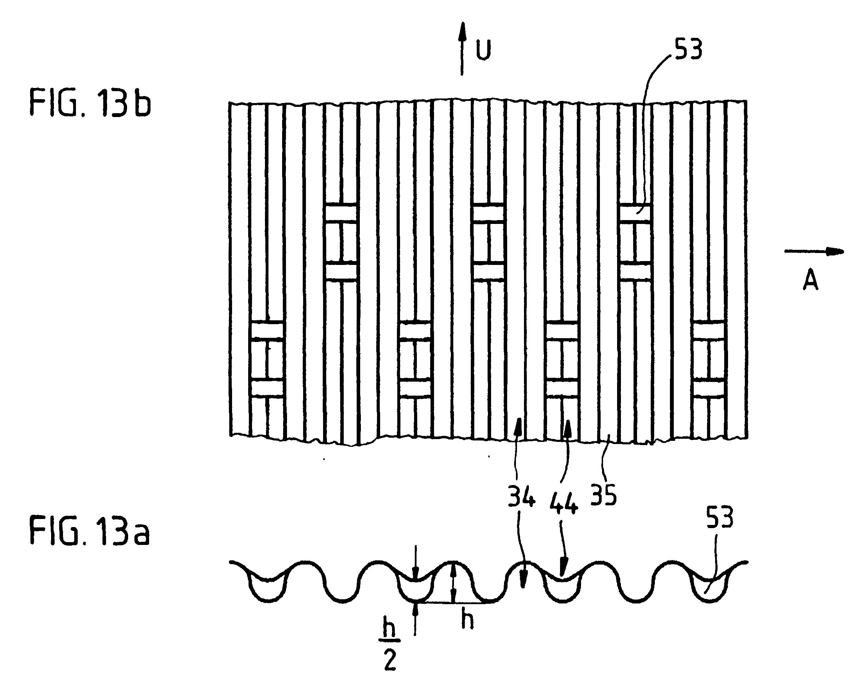

In Fig.13 sind am Beispiel der Ausbildung von Fig. 12b quer zu den Profilrillen Stege 53 in den Profilrillen ausgebildet, die sich jeweils in einer Profilrille 44 von einer angrenzenden Profilrippe 34 zur anderen Profilrippe 34 erstrecken und somit die beiden Profilrippen 34 miteinander verbinden und versteifend anbinden. Die Stege 53 erstrecken sich in den Profilrillen über dem Rillengrund in radialer Richtung etwa bis zur halben Höhe h der radialen Erstreckung der Profilrippen 34 über dem Profilrillengrund. Die Stege 53 zweier benachbarter Rofilrillen sind in Umfangsrichtung versetzt zueinander angeordnet.

In den genannten Ausführungsbeispielen beträgt die Dichte der Profilrippen des Stützelements, die jeweils von zwei benachbarten Profilrillen eingeschlossen werden, im unbelasteten Zustand des Stützrings in Richtung senkrecht zum Profilrippenverlauf 0,4 bis 1,5 Rippen/cm.

In den genannten Ausführungsbeispielen ist die Breite jeder Profilrippe des Stützelements in Richtung senkrecht zum Profilrippenverlauf so ausgebildet, daß sie von der Erstreckung eines Profilblockelements in dieser Breitenrichtung des Laufstreifens eines Fahrzeugluftreifens zu dessen Abstützung im Notlauf das Stützelement ausgebildet ist, abweicht. Dies ist beispielsweise in Fg.11 zu erkennen, in der zum Vergleich der Laufstreifen mitdargestellt ist.
Die Breite jeder Profilrippe des Stützelements in Richtung senkrecht zum Profilrippenverlauf gemessen von Wendepunkt zu Wendepunkt ist vorzugsweise kleiner als die halbe Erstreckung eines Profilblockelements in dieser Richtung des Laufstreifens eines Fahrzeugluftreifens zu dessen Abstützung im Not- bzw Pannenlauf das Stützelement ausgebildet ist.

In den genannten Ausführungsbeispielen ist die Länge h der maximalen radialen Erstreckung der Profilrippe im unbelasteten Zustand des Stützelements ausgehend vom Rillengrund der benachbarten Rillen bis zur maxialen radialen Erstreckung der Profilrippe im Bereich zwischen 1/3 und 2/3 der radialen Erstreckung T des ringförmigen Stützkörpers gemessen von dessen radialer Innenseite an der gleichen axialen Position und der maximalen radiale Erstreckung der Profilrippe ausgebildet ist. Dies ist beispielsweise in Fig.11 dargestellt.

### Bezugszeichenliste

- 1: Felge
- 2: Felgenhorn
- 3: Fahrzeugluftreifen
- 4: Karkasse
- 5: Gürtel
- 6: Wulstbereich
- 7: Verdickung
- 8: Kern
- 9: Seitenwand
- 10: Ringkammer
- 11: Notlaufstützring
- 12: Füllring
- 13: Abriebfester Streifen
- 14: Notlauffläche
- 15: Lauffläche
- 16: unterer Seitenwandbereich
- 17: Festigkeitsträger
- 18: ringförmiges Stützelement
- 20: Ringkammerwand
- 21: Ringkammerwand
- 22: Ringkammerwand
- 23: Ringkammerwand
- 24: Ringöffnung
- 25: Innenseite des Felgenhorns
- 26: Stirnfläche des Felgenhorns
- 30: Lagerfläche
- 31: Tiefbett
- 32: Umfangsrippe
- 33: Lage von Festigkeitsträgern
- 34: Umfangsrippe
- 35: Stützkörperring
- 36: Hohlkammer
- 37: Hohlkammer
- 38: Hohlkammer
- 39: Umfangsnut
- 40: Umfangsnase
- 41: Flachbett
- 42: Anlageschulter
- 43: Fixiemase
- 44: Profilrille
- 45: Seitenwand einer Profilrippe
- 46: Radiale Außenseite einer Profilrippe
- 47: Rillengrund
- 50: Profilblockelement
- 51: Profilrille
- 52: Seitenwand des Profilblockelements
- 53: Steg

## Patentansprüche

1. Fahrzeugrad mit Felge (1) und schlauchlosem Fahrzeugluftreifen (3), bei dem auf der radial äußeren Mantelfläche der Felge (1) ein ringförmiger Stützkörper (11) zum Stützen der Lauffläche (15) des Fahrzeugluftreifens (3) in einem Fahrzeugrad im Notlauf bzw im Pannenlauf des Fahrzeugrades durch Abstützen der Innenfläche des Laufstreifens auf der radialen Außenfläche des ringförmigen Stützkörpers (11) angeordnet ist,
wobei der ringförmige Stützkörper (11) zumindest in seinem radial äußeren Bereich mit elastomerem Material und mit einer Profilierung ausgebildet ist, die parallele Profilrillen (44) umfaßt, wobei zwischen jeweils zwei benachbarten Profilrillen (44) eine Profilrippe (34) eingeschlossen ist, die in ihrer Querschnittskontur in einer Schnittfläche senkrecht zum Rippenverlauf seitlich zu den sie einschließenden Profilrillen (44) jeweils durch eine Seitenfläche (45) und durch eine die beiden Seitenflächen (45) in deren radialen Endbereich verbindende radiale Außenseite (46) begrenzt wird,
**dadurch gekennzeichnet,**
**daß** die Querschnittskontur im unbelasteten Zustand im Bereich der radialen Außenseite (46) konvex gekrümmt ausgebildet ist, wobei die die Profilrippe (34) seitlich begrenzenden Seitenflächen in einer Schnittfläche senkrecht zum Rippenverlauf in radialer Richtung vom Rillengrund ausgehend nach radial außen zur radialen Außenseite der Profilrippe (34) unter Einschluß eines sich in radialer Richtung verändernden Winkels (ε) zur Radialen zur Rippe (34) geneigt ausgebildet ist; so dass im Moment des Berührkontakts mit der Lauffläche des Fahrzeugreifens im Notlauf bzw Pannenlauf zunächst nur im wesentlichen linienförmiger Berührkontakt zwischen Profilrippe und Lauffläche auftritt und danach unter der Belastung die Profilrippe zumindest in ihrem äußeren radialen Bereich radial komprimiert wird, wobei die radiale Außenseite aufgeweitet wird, sodaß im Zustand der eigentlichen Stützwirkung eine entsprechend größere effektive Stützfläche zwischen Profilrippen und Lauffläche erzeugt wird.

2. Fahrzeugrad gemäß den Merkmalen von Anspruch 1,
wobei die Profilrippe (34) einschließenden Profilrillen (44) in ihrem Rillengrund in einer Schnittfläche senkrecht zum Rillenverlauf in ihrer Querschnittskontur im unbelasteten Zustand des Stützkörpers (11) konkav gekrümmt ausgebildet sind.

3. Fahrzeugrad gemäß den Merkmalen von Anspruch 1 oder 2,
wobei die die Profilrippe (34) seitlich begrenzenden Seitenflächen in einer Schnittfläche senkrecht zum Rippenverlauf in radialer Richtung vom Rillengrund ausgehend nach radial außen zur radialen Außenseite der Profilrippe (34) unter Einschluß eines Winkels zur Radialen zur Rippe hin geneigt ausgebildet sind, wobei der Winkel größer 0° und kleiner 45° beträgt.

4. Fahrzeugrad gemäß den Merkmalen von Anspruch 1, 2 oder 3,
wobei die Neigung der Seitenflächen mit einem Wendepunkt des Neigungsverlaufs ausgebildet ist.

5. Fahrzeugrad gemäß den Merkmalen von Anspruch 4,
wobei die Rrofilrippe (34) einschließenden Profilrillen (44) in ihrem Rillengrund in einer Schnittfläche senkrecht zum Rillenverlauf in ihrer Querschnittskontur im unbelasteten Zustand des Stützkörpers (11) konkav gekrümmt ausgebildet sind und dieser Krümmungsverlauf im Bereich der Seitenfläche der Profilrippe (34) stetig fortgeführt und an der Stelle des Wendepunktes in den konvexen Krümmungsverlauf der radialen Außenseite der Profilrippe (34) stetig übergeht.

6. Fahrzeugrad gemäß den Merkmalen von einem oder mehreren der vorangegangenen Ansprüche,
wobei die konvexe und/oder die konkave Krümmung halbkreisförmig ausgebildet ist.

7. Fahrzeugrad gemäß den Merkmalen von einem oder mehreren der vorangegangenen Ansprüche,
wobei die konvexe und/oder die konkave Krümmung sinusförmig ausgebildet ist.

8. Fahrzeugrad gemäß den Merkmalen von einem oder mehreren der vorangegangenen Ansprüche,
wobei die Länge der maximalen radialen Erstreckung der Profilrippe (34) im unbelasteten Zustand des Stützelements ausgehend vom Rillengrund der benachbarten Rillen (44) bis zur maxialen radialen Erstreckung der Profilrippe (34) im Bereich zwischen 1/3 und 2/3 der radialen Erstreckung des ringförmigen Stützkörpers (11) gemessen von dessen radialer Innenseite im Bereich der Profilrippe (34) und der maximalen radiale Erstreckung der Profilrippe (34) ausgebildet ist.

9. Fahrzeugrad gemäß den Merkmalen von einem oder mehreren der vorangegangenen Ansprüche,
wobei die Breite jeder Profilrippe (34) des Stützelements in Richtung senkrecht zum Profilrippenverlauf so ausgebildet ist, daß sie von der Erstreckung eines Profilblockelements in dieser Richtung des Laufstreifens des Fahrzeugluftreifens zu dessen Abstützung im Not- bzw Pannenlauf das Stützelement ausgebildet ist, abweicht, - wobei sie insbesondere kleiner als die halbe Erstreckung eines Profilblockelements in dieser Richtung des Laufstreifens eines Fahrzeugluftreifens zu dessen Abstützung im Not- bzw Pannenlauf das Stützelement ausgebildet ist.

10. Fahrzeugrad gemäß den Merkmalen von einem oder mehreren der vorangegangenen Ansprüche,
wobei die Dichte der Profilrippen (34) des Stützelements, die jeweils von zwei benachbarten Profilrillen (44) eingeschlossen werden, im unbelasteten Zustand des Stützrings in Richtung senkrecht zum Profilrippenverlauf 0,4 bis 1,5 Rippen/cm beträgt.

11. Fahrzeugrad gemäß den Merkmalen von einem oder mehreren der vorangegangenen Ansprüche,
wobei die Profilrippen (34), die jeweils von zwei benachbarten Profilrillen (44) eingeschlossen werden, in Umfangsrichtung des Stützkörpers (11) ausgerichtet sind uns sich über den gesamten Umfang des Stützkörpers (11) erstrecken.

12. Fahrzeugrad gemäß den Merkmalen von Anspruch 11,
wobei diese Profilrippen (34) mit einem in Umfangsrichtung geradlinigen Verlauf ausgebildet sind.

13. Fahrzeugrad gemäß den Merkmalen von Anspruch 11,
wobei diese Profilrippen (34) mit einem in Umfangsrichtung periodisch gekrümmten - insbesondere wellenförmigen - Verlauf ausgebildet sind,
wobei Amplituden und/oder Frequenz der periodischen Krümmung vorzugsweise über den Umfang konstant sind.

14. Fahrzeugrad gemäß den Merkmalen von einem oder mehreren der vorangegangenen Ansprüche,
wobei an wenigstens einer Position im Rillenverlauf einer Profilrille (44) des Stützkörpers im Rillengrund ein Steg ausgebildet ist, der sich quer zum Rillenverlauf erstreckt und zwei benachbarte Profilrippen (34) des Stützkörpers (11) miteinander verbindet und
wobei die maximale radiale Erstreckung des Profilstegs ausgehend vom Rillengrund der Rillen kleiner als die halbe maximale radialen Erstreckung der beiden Profilrippen (34) im unbelasteten Zustand des Stützelements ausgehend vom Rillengrund der Rille bis zur maxialen radialen Erstreckung der Profilrippen im Bereich ausgebildet ist.

15. Fahrzeugrad gemäß den Merkmalen von einem oder mehreren der vorangegangenen Ansprüche,
wobei die axiale Position der in der radial äußeren Mantelfläche ausgebildeten Notlaufstützfläche zumindest teilweise der axialen Position eines in der Felge (1) befestigten Wulstes entspricht.

16. Fahrzeugrad mit - insbesondere einteiliger - Felge und schlauchlosem Luftreifen gemäß den Merkmalen von einem oder mehreren der vorangegangenen Ansprüche,
- mit an jeder Seitenwand des Luftreifens zur Innenseite des Luftreifens hin verdickt ausgebildetem Wulst zur Befestigung des Luftreifens an der Felge (1),
- mit wenigstens in einer axialen Stirnseite der Felge einstückig ausgebildeter Ringkammer mit einer radial inneren,einer radial äußeren, einer axial zur Felgenmitte hin inneren und einer axial zur Felgenaußenseite hin äußeren Ringkammerwand, wobei die nach axial außen zur Stirnseite der Felge (1) hin ausgebildete Ringkammerwand im radial äußeren Bereich als ein radial nach innen gerichtetes Felgenhorn geschlossen ausgebildet und in ihrem radial inneren Bereich als ringförmige Öffnung ausgebildet ist,
- wobei ein Füllring innerhalb der Ringkammer auf der radial inneren Ringkammerwand radial fest gelagert ist,
- wobei sich die Seitenwand des Reifens zumindest im Betriebszustand des Fahrzeugrades von axial außen durch die Öffnung in der axial außen ausgebildeten Ringkammerwand hindurch nach innen erstreckt und der Wulst in der Ringkammer auf der radialen Außenseite des Füllrings radial fest gelagert ist und in formschlüssigem Berührkontakt zu wenigstens einer Ringkammerwand ausgebildet ist, sodaß der Wulst zu dieser Ringkammerwand und über den Füllring nach radial innen formschlüssig mit der einstückig ausgebildeten Ringkammer verbunden ist.

17. Fahrzeugrad gemäß den Merkmalen von einem oder mehreren der vorangegangenen Ansprüche,
- mit an jeder Seitenwand des Luftreifens zur Innenseite des Luftreifens hin verdickt ausgebildetem in seiner Umfangslänge - insbesondere elastisch - veränderbarem Wulst zur Befestigung des Luftreifens an der Felge (1).

18. Fahrzeugrad gemäß den Merkmalen von einem der vorangegangenen Ansprüche,
- mit wenigstens in einer axialen Stirnseite der Felge(1) einstückig ausgebildeter Ringkammer mit einer radial inneren,einer radial äußeren, einer axial zur Felgenmitte hin inneren und einer axial zur Felgenaußenseite hin äußeren Ringkammerwand, wobei die nach radial innen , nach radial außen und nach axial innen zur Felgenmitte hin ausgebildeten Ringkammerwände geschlossen und die nach axial außen zur Stirnseite der Felge hin ausgebildete Ringkammerwand im radial äußeren Bereich als ein radial nach innen gerichtetes Felgenhorn geschlossen ausgebildet und in ihrem radial inneren Bereich als ringförmige Öffnung ausgebildet ist,
- wobei sich die Seitenwand des Reifens zumindest im Betriebszustand des Fahrzeugrades von axial außen durch die Öffnung in der axial außen ausgebildeten Ringkammerwand hindurch nach innen erstreckt und der Wulst in der Ringkammer auf der radialen Außenseite des Füllrings radial fest gelagert ist und in formschlüssigem Berührkontakt wenigstens zur radial äußeren und zur axial äußeren geschlossenen Ringkammerwand ausgebildet ist, sodaß der Wulst wenigstens nach radial außen, nach axial außen, und über den Füllring nach radial innen formschlüssig mit der einstückig ausgebildeten Ringkammer verbunden ist,
- wobei der Wulst insbesondere über seine ganze axiale Erstreckung nach radial innen vollständig auf dem Füllring aufliegt und wobei insbesondere der Wulst und der Füllring die Ringkammer vollständig ausfüllen.

19. Fahrzeugrad gemäß den Merkmalen von einem der vorangegangenen Ansprüche,
wobei wenigstens auf einem - insbesondere auf beiden -axialen Seitenbereich der radial äußeren Mantelfläche der Felge eine Notlaufstützfläche ausgebildet ist, die sich insbesondere axial soweit nach innen erstreckt, daß der Gürtel in seiner axialen Randzonen von der Schulter mit 10 bis 40 % überdeckt ist.

20. Fahrzeugrad gemäß den Merkmalen von einem der Ansprüche 1 bis 18,
wobei auf einem axialen Seitenbereich der radial äußeren Mantelfläche der Felge (1) eine Notlaufstützfläche ausgebildet ist, die sich insbesondere axial soweit nach innen erstreckt, daß der Gürtel in seiner axialen Randzonen von der Schulter mit 50 bis 100 % überdeckt ist.

21. Fahrzeugrad gemäß den Merkmalen von einem oder mehreren der Ansprüche 1 bis 20,
wobei im Wulst ein Gummikem integriert ausgebildet ist,
wobei der Gummikem insbesondere mit einer Shore -A- Härte aus dem Bereich von 80 bis 100, bevorzugt aus dem Bereich zwischen 85 bis 90 ausgebildet ist.

22. Fahrzeugrad gemäß den Merkmalen von einem oder mehreren der Ansprüche 1 bis 21,
wobei der Füllring mit seiner radial äußeren Mantelfläche in seiner Erstreckung innerhalb der Ringkammer im wesentlichen zylindrisch ausgebildet ist.

23. Fahrzeugrad gemäß den Merkmalen von einem oder mehreren der Ansprüche 1 bis 22, bei dem der maximale Durchmesser der Notlaufstützflächen um einen Faktor zwischen 1,05 und 1,3 - insbesondere zwischen 1,1 und 1,2 - größer als der Innenringdurchmesser des Wulstkems im montierten Zustand des Fahrzeugrades beträgt.

24. Fahrzeugrad gemäß den Merkmalen von einem oder mehreren der Ansprüche 1 bis 23,
wobei der Wulstkern eine Dehnbarkeit und/oder Stauchbarkeit von 5 bis 30 % - insbesondere 10 bis 20 % - aufweist.

25. Fahrzeugrad gemäß den. Merkmalen von einem oder mehreren der Ansprüche 1 bis 24,
wobei der Wulstkern eine Dehnbarkeit von 5 bis 30 % -insbesondere 10 bis 20 % und eine Stauchbarkeit von 1 bis 5% - insbesondere von 2,5 bis 3,5 % - aufweist und
wobei der Wulstkern insbesondere im montierten Zustand des Fahrzeugrades ungedehnt und ungestaucht ist.

26. Fahrzeugrad gemäß den Merkmalen von einem oder mehreren der Ansprüche 1 bis 25,
wobei der Luftreifen mit seinem Wulst an der Felge (1) befestigt ist und im unteren Seitenwandbereich an der Felge (1) anliegt.

## Claims

1. Vehicle wheel with rim (1) and tubeless pneumatic vehicle tyre (3), in which an annular support (11) is arranged on the radially outer circumferential surface of the rim (1) for supporting the tread (15) of the pneumatic vehicle tyre (3) in a vehicle wheel in an emergency or when the vehicle wheel is running flat, by supporting the inner surface of the tread rubber on the radial outer surface of the annular support (11), the annular support (11) being formed, at least in its radially outer region, with elastomeric material and with a profiling, which comprises parallel profile grooves (44), two neighbouring profile grooves (44) respectively enclosing between them a profile rib (34), which is bounded in its cross-sectional contour in a sectional area perpendicular to the course followed by the ribs, laterally in relation to the profile grooves (44) enclosing them, respectively by a side face (45) and by a radial outer side (46), connecting the two side faces (45) in their radial end region, **characterized in that**, in the unloaded state, the cross-sectional contour is formed in a convexly curved manner in the region of the radial outer side (46), the side faces that laterally bound the profile rib (34) being formed such that they are inclined in a sectional area perpendicular to the course followed by the ribs, in the radial direction starting from the groove base radially outwards to the radial outer side of the profile rib (34), forming an angle (ε) in relation to the radial to the rib (34) that changes in the radial direction, so that at the moment of physical contact with the tread of the vehicle tyre during an emergency or when running flat, there is initially only essentially linear physical contact between the profile rib and the tread and, after that, the profile rib is radially compressed under the load, at least in its outer radial region, the radial outer side being widened, so that in the state in which the support is actually in effect, a correspondingly larger effective supporting surface is produced between the profile ribs and the tread.

2. Vehicle wheel according to the features of Claim 1, in the unloaded state of the support (11), the profile grooves (44) that enclose the profile rib (34) being formed in their cross-sectional contour in their groove base in a concavely curved manner in a sectional area perpendicular to the course followed by the grooves.

3. Vehicle wheel according to the features of Claim 1 or 2, the side faces that laterally bound the profile rib (34) being formed such that, in a sectional area perpendicular to the course followed by the ribs, they are inclined in the radial direction starting from the base of the grooves radially outwards to the radial outer side of the profile rib (34), forming an angle in relation to the radial to the rib, the angle being greater than 0° and less than 45°.

4. Vehicle wheel according to the features of Claim 1, 2 or 3, the inclination of the side faces being formed with a point of inflection of the course followed by the inclination.

5. Vehicle wheel according to the features of Claim 4, in the unloaded state of the support (11), the profile grooves (44) that enclose the profile rib (34) being formed in their cross-sectional contour in their groove base in a concavely curved manner in a sectional area perpendicular to the course followed by the grooves and the course followed by this curvature being continuously continued in the region of the side face of the profile rib (34) and going over at the location of the point of inflection continuously into the convex course followed by the curvature of the radial outer side of the profile rib (34).

6. Vehicle wheel according to the features of one or more of the preceding claims, the convex and/or concave curvature being formed in a semicircular manner.

7. Vehicle wheel according to the features of one or more of the preceding claims, the convex and/or concave curvature being formed in a sinusoidal manner.

8. Vehicle wheel according to the features of one or more of the preceding claims, in the unloaded state of the supporting element, the length of the maximum radial extent of the profile rib (34) starting from the groove base of the neighbouring grooves (44) to the maximum radial extent of the profile rib (34) being formed in the range between 1/3 and 2/3 of the radial extent of the annular support (11), measured from the radial inner side of the latter in the region of the profile rib (34) and the maximum radial extent of the profile rib (34).

9. Vehicle wheel according to the features of one or more of the preceding claims, the width of each profile rib (34) of the supporting element in the direction perpendicular to the course followed by the profile ribs being formed such that it deviates from the extent of a profile block element in this direction of the tread rubber of the pneumatic vehicle tyre to support the latter during an emergency or when running flat,
- it being in particular less than half the extent of a profile block element in this direction of the tread rubber of a pneumatic vehicle tyre to support the latter during an emergency or when running flat.

10. Vehicle wheel according to the features of one or more of the preceding claims, in the unloaded state of the supporting ring, the density of the profile ribs (34) of the supporting element, which are respectively enclosed by two neighbouring profile grooves (44), being 0.4 to 1.5 ribs/cm in a direction perpendicular to the course followed by the profile ribs.

11. Vehicle wheel according to the features of one or more of the preceding claims, the profile ribs (34), which are respectively enclosed by two neighbouring profile grooves (44), being aligned in the circumferential direction of the supporting body (11) and extending over the entire circumference of the supporting body (11).

12. Vehicle wheel according to the features of Claim 11, these profile ribs (34) being formed with a straight course in the circumferential direction.

13. Vehicle wheel according to the features of Claim 11, these profile ribs (34) being formed with a course which is periodically curved - in particular wave-shaped - in the circumferential direction, the amplitude and/or frequency of the periodic curvature preferably being constant over the circumference.

14. Vehicle wheel according to the features of one or more of the preceding claims, a web which extends transversely in relation to the course followed by the grooves and connects two neighbouring profile ribs (34) of the supporting body (11) to each other being formed in the groove base at at least one position in the course followed by the grooves of a profile groove (44) of the supporting body, and the maximum radial extent of the profile web, starting from the groove base of the grooves, being less than half the maximum radial extent of the two profile ribs (34) in the unloaded state of the supporting element, starting from the groove base of the groove to the maximum radial extent of the profile ribs.

15. Vehicle wheel according to the features of one or more of the preceding claims, the axial position of the emergency supporting surface formed in the radially outer circumferential surface corresponding at least partially to the axial position of a bead fastened in the rim (1).

16. Vehicle wheel with an - in particular integral - rim and a tubeless pneumatic tyre according to the features of one or more of the preceding claims,
- with a bead formed on each sidewall of the pneumatic tyre in a thickened manner towards the inner side of the pneumatic tyre for fastening the pneumatic tyre on the rim (1),
- with an annular chamber, formed in one piece at least in an axial end face of the rim, with a radially inner annular chamber wall, a radially outer annular chamber wall, an axially inner annular chamber wall, towards the middle of the rim, and an axially outer annular chamber wall, towards the outer side of the rim, the axially outer annular chamber wall, formed towards the end face of the rim (1), being formed in a closed manner in the radially outer region as a radially inwardly directed rim horn and in its radially inner region as an annular opening,
- a filling ring being mounted in a radially fixed manner within the annular chamber on the radially inner annular chamber wall,
- the sidewall of the tyre extending, at least in the operating state of the vehicle wheel, from axially outside through the opening in the axially outer annular chamber wall to the inside, and the bead being mounted in a radially fixed manner in the annular chamber on the radially outer side of the filling ring and being formed in positively engaging physical contact with at least one annular chamber wall, so that the bead is connected in relation to this annular chamber wall and via the filling ring radially inwards in a positively engaging manner to the annular chamber formed in one piece.

17. Vehicle wheel according to the features of one or more of the preceding claims,
- with a bead formed on each sidewall of the pneumatic tyre such that it is thickened towards the inner side of the pneumatic tyre and can be changed in its circumferential length - in particular elastically - for fastening the pneumatic tyre on the rim (1).

18. Vehicle wheel according to the features of one of the preceding claims,
- with an annular chamber, formed in one piece at least in an axial end face of the rim (1), with a radially inner annular chamber wall, a radially outer annular chamber wall, an axially inner annular chamber wall, towards the middle of the rim, and an axially outer annular chamber wall, towards the outer side of the rim, the radially inner and radially outer annular chamber walls and the axially inner annular chamber wall, formed towards the middle of the rim, being formed in a closed manner and the axially outer annular chamber wall, formed towards the end face of the rim, being formed in a closed manner in the radially outer region as a radially inwardly directed rim horn and in its radially inner region as an annular opening,
- the sidewall of the tyre extending, at least in the operating state of the vehicle wheel, from axially outside through the opening in the axially outer annular chamber wall to the inside, and the bead being mounted in a radially fixed manner in the annular chamber on the radially outer side of the filling ring and being formed in positively engaging physical contact at least with the radially outer and axially outer closed annular chamber walls, so that the bead is connected at least radially outwards, axially outwards and via the filling ring radially inwards in a positively engaging manner to the annular chamber formed in one piece,
- the bead resting, in particular over its entire axial extent, radially inwards completely on the filling ring and, in particular, the bead and the filling ring completely filling the annular chamber.

19. Vehicle wheel according to the features of one of the preceding claims, an emergency supporting surface, which extends in particular axially so far inwards that, in its axial outer zones, 10 to 40% of the breaker belt is covered by the shoulder, being formed at least on one, in particular on both, axial side region(s) of the radially outer circumferential surface of the rim.

20. Vehicle wheel according to the features of one of Claims 1 to 18, an emergency supporting surface, which extends in particular axially so far inwards that, in its axial outer zones, 50 to 100% of the breaker belt is covered by the shoulder, being formed on one axial side region of the radially outer circumferential surface of the rim (1).

21. Vehicle wheel according to the features of one or more of Claims 1 to 20, a rubber core being formed in an integrated manner in the bead, the rubber core being formed in particular with a Shore A hardness from the range of 80 to 100, preferably from the range of 85 to 90.

22. Vehicle wheel according to the features of one or more of Claims 1 to 21, the filling ring being formed essentially cylindrically with its radially outer circumferential surface, in its extent within the annular chamber.

23. Vehicle wheel according to the features of one or more of Claims 1 to 22, in which the maximum diameter of the emergency supporting surfaces is greater than the inner ring diameter of the bead core in the fitted state of the vehicle wheel by a factor of between 1.05 and 1.3 - in particular between 1.1 and 1.2.

24. Vehicle wheel according to the features of one or more of Claims 1 to 23, the bead core having an extensibility and/or compressibility of 5 to 30% - in particular 10 to 20%.

25. Vehicle wheel according to the features of one or more of Claims 1 to 24, the bead core having an extensibility of 5 to 30% - in particular 10 to 20%
- and a compressibility of 1 to 5%, in particular of 2.5 to 3.5% - and the bead core being unextended and uncompressed in particular in the fitted state of the vehicle wheel.

26. Vehicle wheel according to the features of one or more of Claims 1 to 25, the pneumatic tyre being fastened with its bead on the rim (1) and bearing against the rim (1) in the lower sidewall region.

## Revendications

1. Roue de véhicule dotée d'une jante (1) et d'un bandage pneumatique (3) sans chambre à air pour véhicule,
dans laquelle la jante (1) de la roue présente sur une surface d'enveloppe radialement extérieure un corps annulaire (11) qui soutient la surface de la chaussée (15) du bandage pneumatique de véhicule (3) en cas de roulage avec le bandage pneumatique dégonflé ou crevé en soutenant la surface intérieure de la bande de roulement sur la surface radialement extérieure du corps annulaire de soutien (11),
- le corps annulaire de soutien (11) étant réalisé en un matériau élastomère au moins dans sa zone radialement extérieure et étant doté d'un profil qui comprend des rainures profilées parallèles (44), une nervure profilée (34) étant bordée par deux rainures profilées parallèles (44) de telle sorte que dans une surface de coupe perpendiculaire à l'extension de la nervure profilée, le contour de sa section transversale est délimité par une surface latérale (45) de chaque côté des deux rainures profilées (44) qui la bordent et dans sa zone d'extrémité radiale par un côté radial extérieur (46) qui relie des deux lignes latérales (45),
**caractérisée en ce qu'**en l'absence de charge, la zone latérale (46) radialement extérieure dudit contour de la section transversale est courbée de manière convexe, tandis que dans une surface de coupe perpendiculaire à l'extension radiale de la nervure profilée, dans la direction radiale qui part radialement vers l'extérieur depuis le fond de la rainure et vers le côté radialement extérieur, les surfaces latérales qui délimitent latéralement la nervure profilée (34) sont inclinées vers la nervure (34) en formant avec la radiale un angle (ε) qui varie dans la direction radiale, de telle sorte que lorsque le véhicule roule avec un bandage dégonflé ou crevé, au moment du contact avec la surface de la chaussée, le contact entre les nervures profilées et la surface de la chaussée n'est d'abord qu'essentiellement linéaire et qu'ensuite, la nervure profilée est comprimée radialement sous la charge au moins dans sa zone radialement extérieure, le côté radialement extérieur s'évasant, ce qui crée en situation de soutien effectif une plus grande surface efficace de soutien entre les nervures profilées et la surface de la chaussée.

2. Roue de véhicule selon les caractéristiques de la revendication 1, dans laquelle le contour de la section transversale du fond des rainures profilées (44) qui bordent la nervure profilée (34) est concave lorsque le corps de soutien (11) n'est soumis à aucune charge.

3. Roue de véhicule selon les caractéristiques des revendications 1 ou 2, dans laquelle dans une surface de coupe perpendiculaire à l'extension radiale de la nervure profilée, dans la direction radiale qui part radialement vers l'extérieur depuis le fond de la rainure et vers le côté radialement extérieur, les surfaces latérales qui délimitent latéralement la nervure profilée (34) sont inclinées vers la nervure profilée (34) en formant avec la radiale un angle (ε), l'angle d'inclinaison étant plus grand que 0° et plus petit que 45°.

4. Roue de véhicule selon les caractéristiques des revendications 1, 2 ou 3, dans laquelle l'évolution de l'inclinaison des surfaces latérales présente un point d'inflexion.

5. Roue de véhicule selon les caractéristiques de la revendication 4, dans laquelle dans une surface de coupe perpendiculaire à l'extension des rainures, le contour de la section transversale du fond des rainures profilées (44) qui bordent la nervure profilée (34) est courbé de manière concave lorsque le corps de soutien (11) n'est soumis à aucune charge, et cette courbure se prolongeant de manière continue dans la zone des surfaces latérales de la nervure profilée (34) et se transformant de manière continue en la courbure convexe du côté radialement extérieur de la nervure profilée (34) à partir du point d'inflexion.

6. Roue de véhicule selon les caractéristiques d'une ou plusieurs des revendications précédentes, dans laquelle les courbures convexes et/ou les courbures concaves ont la forme de demi-cercles.

7. Roue de véhicule selon les caractéristiques d'une ou plusieurs des revendications précédentes, dans laquelle les courbures concaves et/ou les courbures convexes ont une forme sinusoïdale.

8. Roue de véhicule selon les caractéristiques d'une ou plusieurs des revendications précédentes, dans laquelle, lorsque l'élément de soutien n'est soumis à aucune charge, la longueur de l'extension radiale maximale de la nervure profilée (34) entre le fond de la rainure (44) voisine et l'extension radiale maximale de la nervure profilée (34), mesurée depuis le côté radialement intérieur du corps annulaire de soutien dans la zone de la nervure profilée (34) et de l'extension radiale maximale de la nervure profilée (34), est comprise entre 1/3 et 2/3 de l'extension radiale du corps annulaire de soutien (11).

9. Roue de véhicule selon les caractéristiques d'une ou plusieurs des revendications précédentes, dans laquelle la largeur de chaque nervure profilée (34) de l'élément de soutien dans la direction perpendiculaire à l'extension de la nervure profilée diffère de l'extension d'un élément en bloc profilé dans la direction de la bande de roulement du bandage pneumatique du véhicule dans laquelle l'élément de soutien est prévu pour assurer un soutien lorsque le véhicule roule avec un bandage dégonflé ou crevé, cette largeur étant en particulier plus petite que la moitié de l'extension d'un élément en bloc profilé dans la direction de la bande de roulement du bandage pneumatique du véhicule dans laquelle l'élément de soutien est prévu pour assurer un soutien lorsque le véhicule roule avec un bandage dégonflé ou crevé.

10. Roue de véhicule selon les caractéristiques d'une ou plusieurs des revendications précédentes, dans laquelle, lorsque l'anneau de soutien n'est soumis à aucune charge, sa densité en nervures profilées (34) bordées par deux rainures profilées (44) voisine est comprise entre 0,4 et 1,5 nervure par centimètre dans la direction perpendiculaire à l'extension des nervures profilées.

11. Roue de véhicule selon les caractéristiques d'une ou plusieurs des revendications précédentes, dans laquelle les nervures profilées (34) bordées par deux rainures profilées (44) voisines sont orientées dans la direction périphérique du corps de soutien (11) et s'étendent sur toute la périphérie du corps de soutien (11).

12. Roue de véhicule selon les caractéristiques de la revendication 11, dans laquelle ces nervures profilées (34) s'étendent en ligne droite dans la direction périphérique.

13. Roue de véhicule selon les caractéristiques de la revendication 11, dans laquelle ces nervures profilées (34) présentent une courbure périodique, en particulier ondulée, dans la direction périphérique, l'amplitude et/ou la fréquence de la courbure périodique étant de préférence constantes sur toute la périphérie.

14. Roue de véhicule selon les caractéristiques d'une ou plusieurs des revendications précédentes, dans laquelle une traverse qui s'étend transversalement par rapport à l'extension de la rainure est formée en au moins un emplacement du fond d'une rainure (44) du corps de soutien et relie l'une à l'autre deux nervures profilées voisines (34) du corps de soutien (11), tandis que lorsque l'élément de soutien n'est soumis à aucune charge, l'extension radiale maximale de la traverse profilée depuis le fond de la rainure étant plus petite que la moitié de l'extension radiale maximale des deux nervures profilées (34), depuis le fond de la rainure jusqu'à l'extension radiale maximale des nervures profilées dans cette zone.

15. Roue de véhicule selon les caractéristiques d'une ou plusieurs des revendications précédentes, dans laquelle lorsque le bandage pneumatique est dégonflé, la position axiale de la surface de soutien formée dans la surface d'enveloppe radialement extérieure correspond au moins partiellement à la position axiale d'un bourrelet fixé dans la jante (1).

16. Roue de véhicule qui présente une jante en particulier d'un seul tenant et un bandage pneumatique sans chambre à air selon les caractéristiques d'une ou plusieurs des revendications précédentes,
- qui présente sur chaque paroi latérale du bandage pneumatique un bourrelet qui s'épaissit vers l'intérieur du bandage pneumatique pour assurer la fixation du bandage pneumatique sur la jante (1),
- qui présente sur au moins un côté axialement frontal de la jante une chambre annulaire d'un seul tenant dotée d'une paroi radialement intérieure, d'une paroi radialement extérieure, d'une paroi axialement intérieure orientée vers le milieu de la jante et d'une paroi axialement extérieure orientée vers l'extérieur de la jante, la paroi radialement extérieure de la chambre annulaire, orientée vers le côté frontal extérieur de la jante (1) étant fermée dans la partie radialement extérieure pour former un rebord de jante orienté radialement vers l'intérieur et la zone radialement intérieure de cette même paroi étant configurée comme ouverture annulaire,
- un anneau de remplissage est monté de manière radialement fixe à l'intérieur de la chambre annulaire sur la paroi radialement intérieure de celle-ci,
- tandis qu'au moins lorsque la roue du véhicule est en fonctionnement, la paroi latérale du bandage s'étend vers l'intérieur depuis l'extérieur axial à travers l'ouverture ménagée dans la paroi axialement extérieure de la chambre annulaire et le bourrelet dans la chambre annulaire est monté fixement sur le côté radialement extérieur de l'anneau de remplissage et est configuré de manière à être en contact en correspondance géométrique avec au moins une paroi de la chambre annulaire de telle sorte que le bourrelet soit relié à cette paroi de chambre annulaire et soit relié en correspondance géométrique à la chambre annulaire d'un seul tenant et radialement vers l'intérieur par l'intermédiaire de l'anneau de remplissage.

17. Roue de véhicule selon les caractéristiques d'une ou plusieurs des revendications précédentes, qui présente sur chaque paroi latérale du bandage pneumatique un bourrelet qui s'épaissit vers l'intérieur du bandage pneumatique et qui varie, en particulier élastiquement, suivant la longueur de sa périphérie, pour assurer la fixation du bandage pneumatique sur la jante (1),

18. Roue de véhicule selon les caractéristiques d'une des revendications précédentes,
- qui présente sur au moins un côté axialement frontal de la jante (1) une chambre annulaire d'un seul tenant dotée d'une paroi radialement intérieure, d'une paroi radialement extérieure, d'une paroi axialement intérieure orientée vers le milieu de la jante et d'une paroi axialement extérieure orientée vers l'extérieur de la jante, la paroi radialement intérieure, la paroi radialement extérieure et la paroi axialement intérieure orientée vers le milieu de la jante étant fermées, la zone radialement extérieure de la paroi axialement extérieure de la chambre annulaire, orientée axialement vers l'extérieur et le côté frontal extérieur de la jante étant fermée pour former un rebord de jante orienté radialement vers l'intérieur et la zone radialement intérieure de cette même paroi étant configurée comme ouverture annulaire,
- tandis qu'au moins lorsque la roue du véhicule est en fonctionnement, la paroi latérale du bandage s'étend vers l'intérieur depuis l'extérieur axial à travers l'ouverture ménagée dans la paroi axialement extérieure de la chambre annulaire et le bourrelet dans la chambre annulaire est monté fixement sur le côté radialement extérieur de l'anneau de remplissage et est configuré de manière à être en contact en correspondance géométrique au moins avec la paroi radialement extérieure et la paroi axialement extérieure fermées de la chambre annulaire de telle sorte que le bourrelet soit relié en correspondance géométrique à la chambre annulaire d'un seul tenant, au moins radialement vers l'extérieur, axialement vers l'extérieur et radialement vers l'intérieur par l'intermédiaire de l'anneau de remplissage.
- le bourrelet s'appuyant complètement, en particulier sur toute son extension axiale, radialement vers l'intérieur sur l'anneau de remplissage, le bourrelet et l'anneau de remplissage remplissant en particulier complètement la chambre annulaire.

19. Roue de véhicule selon les caractéristiques d'une des revendications précédentes, dans laquelle une surface de soutien en cas de roulement à bandage pneumatique dégonflé est réalisée au moins sur l'une des zones axialement latérales et en particulier sur les deux zones axialement latérales de la surface radialement extérieure de l'enveloppe de la jante et s'étend en particulier axialement vers l'intérieur de telle sorte que l'épaulement recouvre entre 10 et 40 % des zones axialement périphériques de la nappe d'armature.

20. Roue de véhicule selon les caractéristiques d'une des revendications 1 à 18, dans laquelle une surface de soutien en cas de roulement à bandage pneumatique dégonflé est réalisée sur au moins l'une des zones axialement latérales de la surface radialement extérieure de l'enveloppe de la jante (1) et s'étend en particulier axialement vers l'intérieur de telle sorte que l'épaulement recouvre entre 50 et 100 % des zones axialement périphériques de la nappe d'armature.

21. Roue de véhicule selon les caractéristiques d'une ou plusieurs des revendications 1 à 20, dans laquelle une âme en caoutchouc est intégrée dans le bourrelet, l'âme en caoutchouc présentant en particulier une dureté Shore A dans la plage de 80 à 100 et de préférence de 85 à 90.

22. Roue de véhicule selon les caractéristiques d'une ou plusieurs des revendications 1 à 21, dans laquelle l'extension de la surface radialement extérieure d'enveloppe de l'anneau de remplissage dans la chambre annulaire est essentiellement cylindrique.

23. Roue de véhicule selon les caractéristiques d'une ou plusieurs des revendications 1 à 22, dans laquelle le diamètre maximal de la surface de soutien en cas de roulement à bandage pneumatique dégonflé est plus grand d'un facteur compris entre 1,05 et 1,3 et en particulier entre 1,1 et 1,2 que le diamètre intérieur de l'âme du bourrelet lorsque la roue de véhicule est montée.

24. Roue de véhicule selon les caractéristiques d'une ou plusieurs des revendications 1 à 23, dans laquelle l'âme du bourrelet peut s'allonger et/ou s'écraser sous pression dans une proportion comprise entre 5 et 30 % et en particulier entre 10 et 20 %.

25. Roue de véhicule selon les caractéristiques d'une ou plusieurs des revendications 1 à 24, dans laquelle le noyau de bourrelet peut s'allonger dans une proportion de 5 à 30 % et en particulier de 10 à 20 % et s'écraser sous pression dans une proportion de 1 à 5 % et en particulier de 2,5 à 3,5 % et dans laquelle l'âme du bourrelet n'est ni allongée ni écrasée sous pression en particulier lorsque la roue de véhicule est montée.

26. Roue de véhicule selon les caractéristiques d'une ou plusieurs des revendications 1 à 25, dans laquelle le bandage pneumatique est fixé à la jante (1) au moyen de son bourrelet et repose sur la jante (1) dans la partie inférieure de sa paroi latérale.
